# EUROPEAN PATENT APPLICATION

(11) **EP 4 675 394 A1**
(43) Date of publication of application: **07.01.2026**
(21) Application number: 24832359.4
(22) Date of filing: 19.06.2024
(51) Int. Cl.: G06F 1/16, G06F 9/4401, G06F 3/14, H04N 5/76

(54) **MULTI-FOLDABLE ELECTRONIC DEVICE THAT CONTROLS EXECUTION OF APPLICATION**

(30) Priority: 26.06.2023 KR 20230081875; 31.07.2023 KR 20230099562
(71) Applicant: Samsung Electronics Co., Ltd., Suwon-si, Gyeonggi-do 16677 (KR)
(72) Inventor: BAE, Hyerim, Suwon-si, Gyeonggi-do 16677 (KR); CHANG, Seho, Suwon-si, Gyeonggi-do 16677 (KR); YOON, Byounguk, Suwon-si, Gyeonggi-do 16677 (KR)
(74) Representative: HGF
(86) International application number: PCT/KR2024/008463
(87) International publication number: WO 2025/005580

(57) **Abstract**

Provided is an electronic device having a multi-foldable housing structure. The electronic device may: display an execution screen of an application on a second display when the application is executed in a state in which a first housing, a second housing, and a third housing are folded; identify that the first housing and the second housing are switched from a folded state to an unfolded state on the basis of data received from a sensor while the application using the second display is being executed; temporarily pause execution of the application on the basis that the first housing and the second housing are switched to the unfolded state; identify that the second housing and the third housing are switched from the folded state to the unfolded state on the basis of data received from the sensor; and execute the temporarily paused application, using a first display, on the basis that the second housing and the third housing are switched to the unfolded state.

## Description

### [Technical Field]

The embodiment of the present disclosure relates to an electronic device for controlling execution of an application in a multi-foldable electronic device.

### [Background Art]

An electronic device may have a foldable housing structure that is divided into two housings around a single hinge assembly. A first display area of a display (e.g., a flexible display) may be disposed on a first housing, and a second display area of the display may be disposed on a second housing. The hinge assembly may be implemented in an in-folding manner such that, when the foldable housing structure is in a folded state, the first display area and the second display area face each other. Alternatively, the electronic device may be implemented in an out-folding manner such that, when the foldable housing structure is in a folded state, the first display area and the second display area face in opposite directions.

The electronic device may have a multi-foldable housing structure. For example, the electronic device may include a first housing, a second housing, a third housing, a first hinge assembly that couples the first housing and the second housing and allows the first housing to rotate with respect to the second housing, and a second hinge assembly that couples the third housing and the second housing and allows the third housing to rotate with respect to the second housing. Both the first hinge assembly and the second hinge assembly may be implemented in an in-folding manner or an out-folding manner. Alternatively, one of the first hinge assembly or the second hinge assembly may be implemented in an in-folding manner, and the other may be implemented in an out-folding manner.

The information described above is provided as the related art for the purpose of enhancing the understanding of the present disclosure. No assertion or determination is made with respect to the applicability of any of the above-mentioned as the prior art related to the present disclosure.

### [Disclosure of Invention]

### [Technical Problem]

The electronic device may include a multi-foldable housing structure, a first display (or main display) disposed on a front surface of the electronic device, and a second display (or sub display) disposed on a rear surface of the electronic device. The electronic device may display an execution screen of an application on the first display or the second display, based on a state of the multi-foldable housing structure.

An embodiment of the present disclosure may provide an electronic device with improved usability by controlling display and sound output when a state of the multi-foldable housing structure is switched while an application is being executed. Technical problems to be solved by the present disclosure are not limited to the above-mentioned technical problems, and other technical problems, which are not mentioned above, may be clearly understood from the following descriptions by those skilled in the art to which the present invention pertains.

### [Solution to Problem]

According to an embodiment, an electronic device may include: a first housing; a second housing; a third housing; a first hinge assembly configured to couple the first housing to one side of the second housing, and to allow the first housing to rotate; a second hinge assembly configured to couple the third housing to the other side of the second housing, and to allow the third housing to rotate; a first display including: a first display area disposed on the first housing, a second display area disposed on the second housing, and a third display area disposed on the third housing; a second display disposed on the first housing and disposed in a direction opposite to the first display area; at least one sensor configured to detect a first folding state between the first housing and the second housing, and a second folding state between the second housing and the third housing; a memory storing instructions; and a processor. The instructions, when executed by the processor, may cause the electronic device to display an execution screen of an application on the second display, when the application is executed in a state where the first housing, second housing, and third housing are folded. The instructions, when executed by the processor, may cause the electronic device to identify, based on data received from the at least one sensor, that the first housing and the second housing are switched from the folded state to the unfolded state, during the execution of the application using the second display. The instructions, when executed by the processor, may cause the electronic device to pause the execution of the application, based on the first housing and the second housing being switched to the unfolded state. The instructions, when executed by the processor, may cause the electronic device to identify, based on data received from the at least one sensor, that the second housing and the third housing are switched from the folded state to the unfolded state. The instructions, when executed by the processor, may cause the electronic device to perform execution of the paused application by using the first display, based on the second housing and the third housing being switched to the unfolded state.

According to an embodiment, an electronic device may include: a first housing; a second housing; a third housing; a first hinge assembly configured to couple the first housing to one side of the second housing, and to allow the first housing to rotate; a second hinge assembly configured to couple the third housing to the other side of the second housing, and to allow the third housing to rotate; a first display including: a first display area disposed on the first housing, a second display area disposed on the second housing, and a third display area disposed on the third housing; a second display disposed on the first housing and disposed in a direction opposite to the first display area; at least one sensor configured to detect a first folding state between the first housing and the second housing, and a second folding state between the second housing and the third housing; a memory storing instructions; and a processor. The instructions, when executed by the processor, may cause the electronic device to display an execution screen of an application on the first display, when the application is executed in a state where the first housing, second housing, and third housing are unfolded. The instructions, when executed by the processor, may cause the electronic device to identify, based on data received from the at least one sensor, that the second housing and the third housing are switched from the unfolded state to the folded state, during the execution of the application using the second display. The instructions, when executed by the processor, may cause the electronic device to pause the execution of the application, based on the second housing and the third housing being switched to the folded state. The instructions, when executed by the processor, may cause the electronic device to identify, based on data received from the at least one sensor, that the first housing and the second housing are switched from the unfolded state to the folded state. The instructions, when executed by the processor, may cause the electronic device to perform execution of the temporarily paused application by using the second display, based on the first housing and the second housing being switched to the folded state.

According to an embodiment, an electronic device may include: a first housing; a second housing; a third housing; a first hinge assembly configured to couple the first housing to one side of the second housing, and to allow the first housing to rotate; a second hinge assembly configured to couple the third housing to the other side of the second housing, and to allow the third housing to rotate; a first display including a first display area disposed on the first housing, a second display area disposed on the second housing, and a third display area disposed on the third housing; at least one sensor configured to detect a first folding state between the first housing and the second housing, and a second folding state between the second housing and the third housing; a memory storing instructions; and a processor. The instructions, when executed by the processor, may cause the electronic device to display a first execution screen of an application on the first display area, the second display area, and the third display area, in a state where the first housing, the second housing, and the third housing are in the unfolded state. The instructions, when executed by the processor, may cause the electronic device to identify, based on data received from the at least one sensor, that the first housing and the second housing are switched from the unfolded state to the folded state. The instructions, when executed by the processor, may cause the electronic device, when the first housing and the second housing are switched to the folded state, to generate a second execution screen by reconfiguring a layout of the first execution screen based on a size of the third display area, and to display the second execution screen on the third display area.

According to an embodiment, an electronic device may include: a first housing; a second housing; a third housing; a first hinge assembly configured to couple the first housing to one side of the second housing, and to allow the first housing to rotate; a second hinge assembly configured to couple the third housing to the other side of the second housing, and to allow the third housing to rotate; a first display including: a first display area disposed on the first housing, a second display area disposed on the second housing, and a third display area disposed on the third housing; a second display disposed on the first housing and disposed in a direction opposite to the first display area; at least one sensor configured to detect a first folding state between the first housing and the second housing, and a second folding state between the second housing and the third housing; a memory storing instructions; and a processor. The instructions, when executed by the processor, may cause the electronic device, while a first execution screen of an application is displayed on the second display in a folded state of the first housing, the second housing, and the third housing, to identify, based on data received from the at least one sensor, that the first housing and the second housing are switched from the folded state to the unfolded state. The instructions, when executed by the processor, may cause the electronic device, based on the first housing and the second housing being switched to the unfolded state, to display the first execution screen on the first display area of the first display, instead of the second display.

According to an embodiment, an electronic device may include: a foldable housing including a first housing, a second housing rotatably coupled to the first housing, a third housing rotatably coupled to the second housing; a first hinge assembly configured to rotatably couple the first housing and the second housing; a second hinge assembly configured to rotatably couple the second housing and the third housing; a first display including a first display area disposed in the first housing, a second display area disposed in the second housing, and a third display area disposed in the third housing; a second display disposed on a rear surface of the first display, and disposed in a direction opposite to the first display area or the second display area; at least one sensor configured to detect a folding state of the first housing, the second housing, or the third housing; a memory storing instructions ; and a processor. The instructions, when executed by the processor, may cause the electronic device, when an application is executed in a first state in which the first housing, the second housing, and the third housing are folded, to display an execution screen of the application on the second display. The instructions, when executed by the processor, may cause the electronic device to identify, based on data received from the at least one sensor, that at least one housing of the first housing, the second housing, or the third housing is switched from an folded state to an unfolded second state, while the application is being executed. The instructions, when executed by the processor, may cause the electronic device, based on the electronic device being switched to the second state, to pause the execution of the application on the second display. The instructions, when executed by the processor, may cause the electronic device to identify, based on data received from the at least one sensor, that the first housing, the second housing, and the third housing are switched from an folded state to an unfolded third state. The instructions, when executed by the processor, may cause the electronic device, based on the electronic device being switched to the third state, to display the execution screen of the application on the first display.

### [Advantageous Effects of Invention]

According to an embodiment of the present disclosure, the electronic device may improve usability by controlling display and sound output when a state of the multi-foldable housing structure is switched while an application is being executed in the electronic device. In addition, various effects that can be directly or indirectly identified through the present document may be provided.

### [Brief Description of Drawings]

FIG. 1 is a block diagram of an electronic device in a network environment, according to various embodiments.
FIG. 2 is a block diagram of a display module, according to various embodiments.
FIGS. 3A to 3J illustrate an electronic device having an in-folding type multi-foldable housing structure, according to an embodiment.
FIG. 4 is a block configuration diagram of an electronic device, according to an embodiment.
FIGS. 5A, 5B, and 5C are diagrams for describing operations of a processor for controlling execution of a media player based on a state transition in an electronic device, according to an embodiment.
FIGS. 6A, 6B, and 6C are diagrams for describing operations of a processor for controlling execution of a media player based on a state transition in an electronic device, according to an embodiment.
FIGS. 7A and 7B are diagrams for describing operations of a processor for controlling execution of a call application based on a state transition in an electronic device, according to an embodiment.
FIGS. 8A and 8B are diagrams for describing operations of a processor for controlling execution of a camera application based on a state transition in an electronic device, according to an embodiment.
FIGS. 9A and 9B are diagrams for describing operations of a processor for reconfiguring a layout of a media player execution screen based on a state transition in an electronic device, according to an embodiment.
FIGS. 10A and 10B are diagrams for describing operations of a processor for allowing a user to view a media player execution screen seamlessly when a state of an electronic device is changed, according to an embodiment.
FIGS. 11A, 11B, and 11C are diagrams for describing operations of a processor for allowing a user to view a media player execution screen seamlessly when a state of an electronic device is changed, according to an embodiment.
FIGS. 12A and 12B are diagrams for describing operations of a processor for allowing a user to view a media player execution screen seamlessly when a state of an electronic device is changed.
FIGS. 13A and 13B are diagrams for describing operations of a processor for changing a display position of a card execution screen based on a state transition of an electronic device, according to an embodiment.
FIG. 14 is a flowchart for describing operations performed by a processor while the electronic device is changed from a folded state to an unfolded state, according to an embodiment.
FIG. 15 is a flowchart for describing operations performed in the electronic device while the electronic device is changed from an unfolded state to a folded state, according to an embodiment.
FIG. 16 is a flowchart for describing operations performed in the electronic device when a first foldable housing structure is changed to a folded state in a state where the electronic device is unfolded, according to an embodiment.

Hereinafter, embodiments of the present disclosure will be described in detail with reference to the accompanying drawings so that those with ordinary skill in the art to which the present disclosure pertains may easily carry out the embodiments. However, the present disclosure may be implemented in various different ways and is not limited to the embodiments described herein. In connection with the description of the drawings, the similar or same reference numerals may be used for the similar or same constituent elements. In addition, in the drawings and related descriptions, the description of well-known features and configurations may be omitted for clarity and conciseness.

### [Mode for the Invention]

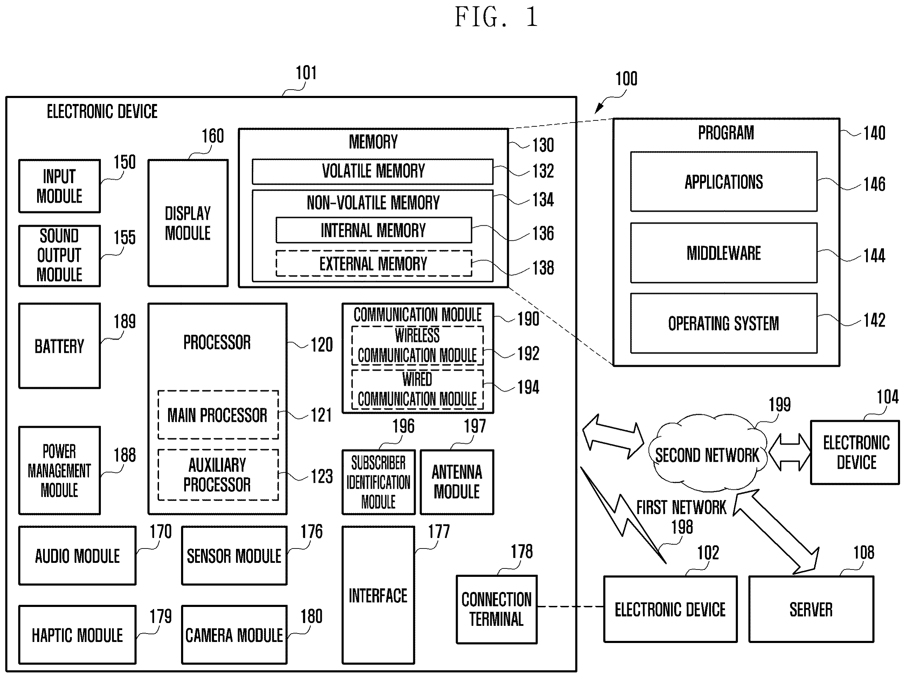

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

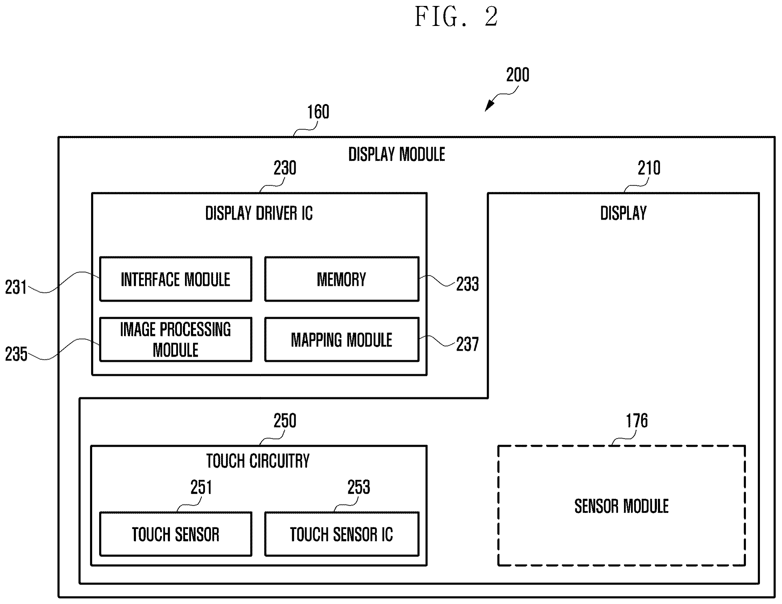

Fig. 2 is a block diagram 200 illustrating the display module 160 according to various embodiments. Referring to Fig. 2, the display module 160 may include a display 210 and a display driver integrated circuit (DDI) 230 to control the display 210. The DDI 230 may include an interface module 231, memory 233 (e.g., buffer memory), an image processing module 235, or a mapping module 237. The DDI 230 may receive image information that contains image data or an image control signal corresponding to a command to control the image data from another component of the electronic device 101 via the interface module 231. For example, according to an embodiment, the image information may be received from the processor 120 (e.g., the main processor 121 (e.g., an application processor)) or the auxiliary processor 123 (e.g., a graphics processing unit) operated independently from the function of the main processor 121. The DDI 230 may communicate, for example, with touch circuitry 250 or the sensor module 176 via the interface module 231. The DDI 230 may also store at least part of the received image information in the memory 233, for example, on a frame by frame basis. The image processing module 235 may perform pre-processing or post-processing (e.g., adjustment of resolution, brightness, or size) with respect to at least part of the image data. According to an embodiment, the pre-processing or post-processing may be performed, for example, based at least in part on one or more characteristics of the image data or one or more characteristics of the display 210. The mapping module 237 may generate a voltage value or a current value corresponding to the image data pre-processed or post-processed by the image processing module 235. According to an embodiment, the generating of the voltage value or current value may be performed, for example, based at least in part on one or more attributes of the pixels (e.g., an array, such as an RGB stripe or a pentile structure, of the pixels, or the size of each subpixel). At least some pixels of the display 210 may be driven, for example, based at least in part on the voltage value or the current value such that visual information (e.g., a text, an image, or an icon) corresponding to the image data may be displayed via the display 210.

According to an embodiment, the display module 160 may further include the touch circuitry 250. The touch circuitry 250 may include a touch sensor 251 and a touch sensor IC 253 to control the touch sensor 251. The touch sensor IC 253 may control the touch sensor 251 to sense a touch input or a hovering input with respect to a certain position on the display 210. To achieve this, for example, the touch sensor 251 may detect (e.g., measure) a change in a signal (e.g., a voltage, a quantity of light, a resistance, or a quantity of one or more electric charges) corresponding to the certain position on the display 210. The touch circuitry 250 may provide input information (e.g., a position, an area, a pressure, or a time) indicative of the touch input or the hovering input detected via the touch sensor 251 to the processor 120. According to an embodiment, at least part (e.g., the touch sensor IC 253) of the touch circuitry 250 may be formed as part of the display 210 or the DDI 230, or as part of another component (e.g., the auxiliary processor 123) disposed outside the display module 160.

According to an embodiment, the display module 160 may further include at least one sensor (e.g., a fingerprint sensor, an iris sensor, a pressure sensor, or an illuminance sensor) of the sensor module 176 or a control circuit for the at least one sensor. In such a case, the at least one sensor or the control circuit for the at least one sensor may be embedded in one portion of a component (e.g., the display 210, the DDI 230, or the touch circuitry 250)) of the display module 160. For example, when the sensor module 176 embedded in the display module 160 includes a biometric sensor (e.g., a fingerprint sensor), the biometric sensor may obtain biometric information (e.g., a fingerprint image) corresponding to a touch input received via a portion of the display 210. As another example, when the sensor module 176 embedded in the display module 160 includes a pressure sensor, the pressure sensor may obtain pressure information corresponding to a touch input received via a partial or whole area of the display 210. According to an embodiment, the touch sensor 251 or the sensor module 176 may be disposed between pixels in a pixel layer of the display 210, or over or under the pixel layer.

The electronic device (e.g., smartphone, tablet PC, notebook PC) 101 may have a multi-foldable housing structure configured to include a first housing, a second housing, a third housing, a first hinge assembly, and a second hinge assembly. The first hinge assembly may couple the first housing and the second housing, and may be configured such that the first housing rotates. The second hinge assembly may couple the third housing and the second housing, and may be configured such that the third housing rotates. Both the first hinge assembly and the second hinge assembly may be implemented in an in-folding manner.

The electronic device 101 may include a multi-foldable housing structure, a first display (or main display) disposed on a front surface of the electronic device, and a second display (or sub display) disposed on a rear surface of the electronic device. In the present document, a surface on which the first display is disposed may be defined as a front surface of the electronic device 101. Further, a surface on which the second display is disposed, as an opposite surface to the front surface, may be defined as a rear surface of the electronic device 101. In addition, a surface that surrounds a space between the front surface and the rear surface may be defined as a side surface of the electronic device 101. Hereinafter, the term "state" may refer to a structural form, shape, or configuration of the electronic device or constituent elements thereof (e.g., display, foldable housing structure) according to an embodiment of the present disclosure.

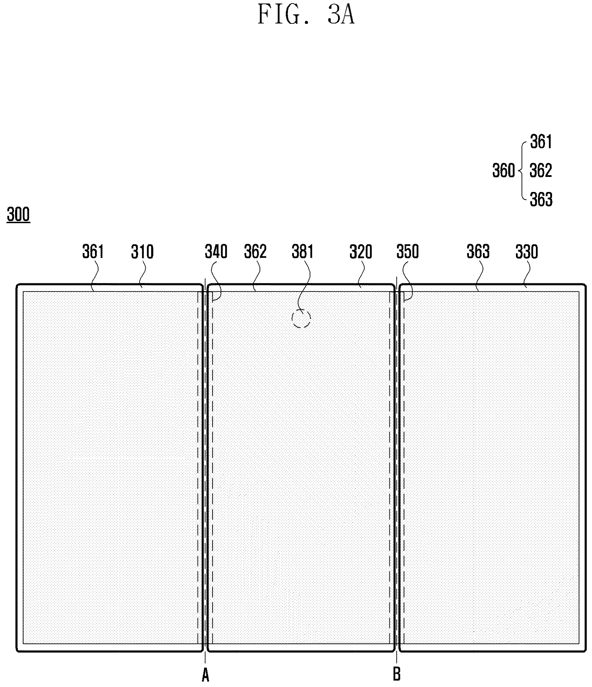

FIGS. 3A to 3J illustrate an electronic device 300 having an in-folding type multi-foldable housing structure, according to an embodiment. With reference to FIGS. 3A to 3J, the electronic device 300 (e.g., the electronic device 101) may include a first housing 310, a second housing 320, a third housing 330, a first hinge assembly 340, a second hinge assembly 350, a first display 360, a second display 370, and a plurality of cameras 381, 382, 383, 384, and 385. The first hinge assembly 340 may couple the first housing 310 to one side of the second housing 320, and may be configured such that the first housing 310 rotates with respect to the second housing 320. The second hinge assembly 350 may couple the third housing 330 to the other side of the second housing 320, and may be configured such that the third housing 330 rotates with respect to the second housing 320. The first display 360 and the second display 370 may be disposed in a space formed by the multi-foldable housing structure 310, 320, and 330.

With reference to FIG. 3A, the first display (in other words, main display or front surface display) 360 may be disposed from the first housing 310 across the first hinge assembly 340, the second housing 320, and the second hinge assembly 350 to the third housing 330. According to an embodiment, a screen of the first display 360 may be visually exposed through a front surface of the electronic device 300. The first display 360 may be implemented as a flexible display such that a portion of the display positioned on the first hinge assembly 340 and the second hinge assembly 350 may be at least partially bent. The first display 360 may be divided into a first display area 361 positioned on the first housing 310, a second display area 362 positioned on the second housing 320, and a third display area 363 positioned on the third housing 330, based on a first folding axis A of the first hinge assembly 340 and a second folding axis B of the second hinge assembly 350. The electronic device 300 may include at least one front surface camera disposed inside the electronic device 300, such that its lens is visually exposed through the front surface. For example, a first camera 381 may be positioned under the second display area 362. A lens of the first camera 381 may be disposed to face the second display area 362, such that light from outside the electronic device 300 may be received through at least a portion of the second display area 362 or at least one opening formed in the second display area 362. According to an embodiment, as the first camera 381 is disposed under the display and receives light through the display, the first camera 381 may be referred to as a so-called under display camera (UDC).

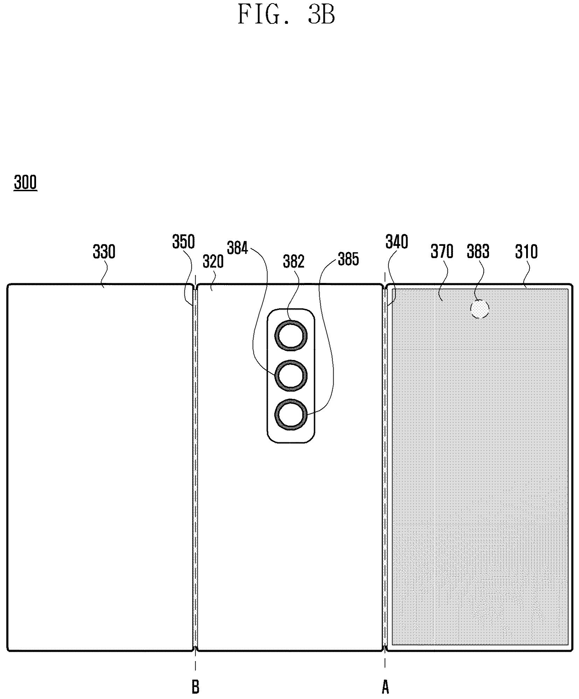

With reference to FIG. 3B, the second display (in other words, sub display or rear surface display) 370 may be positioned on the first housing 310. A screen of the second display 370 may be visually exposed through a rear surface of the electronic device 300. The electronic device 300 may include at least one rear surface camera including a lens disposed to face a rear surface of the electronic device 300. For example, the electronic device 300 may include a second camera 382 positioned on the second housing 320 and including a lens facing the rear surface of the electronic device 300, and a third camera 383 disposed under the second display 370 and including a lens facing the rear surface of the electronic device 300. According to an embodiment, the electronic device 300 may further include a fourth camera 384 and a fifth camera 385, each including a lens facing the rear surface of the electronic device 300. The fourth camera 384 and the fifth camera 385 may be positioned adjacent to the second camera 382 on the second housing 320. For example, the second camera 382 may include a wide-angle lens, the fourth camera 384 may include an ultra-wide-angle lens, and the fifth camera 385 may include a telephoto lens.

According to an embodiment, a state between two housings may be defined based on an angle formed between the two housings coupled by a hinge assembly. For example, when the angle between the two housings is approximately 180 degrees, the state may be defined as an unfolded (flat or open) state. According to an embodiment, when the angle between the two housings is approximately 10 degrees or less, the state may be defined as a folded (or closed) state. According to an embodiment, when the angle formed is greater than that of the folded state of the two housings and less than that of the unfolded state (e.g., approximately between 10 degrees and 179 degrees), the state may be defined as an intermediate state. Here, the intermediate state may be otherwise expressed as a partially folded state or a partially unfolded state.

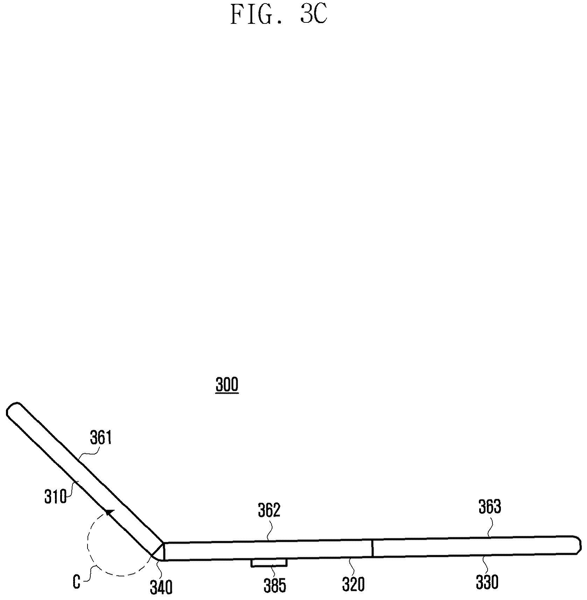

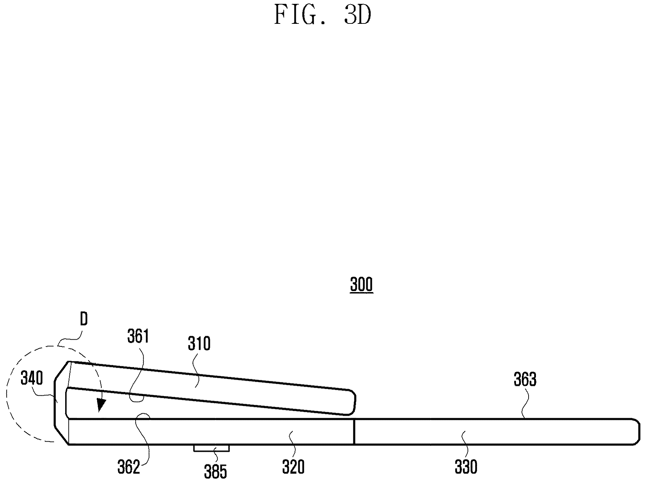

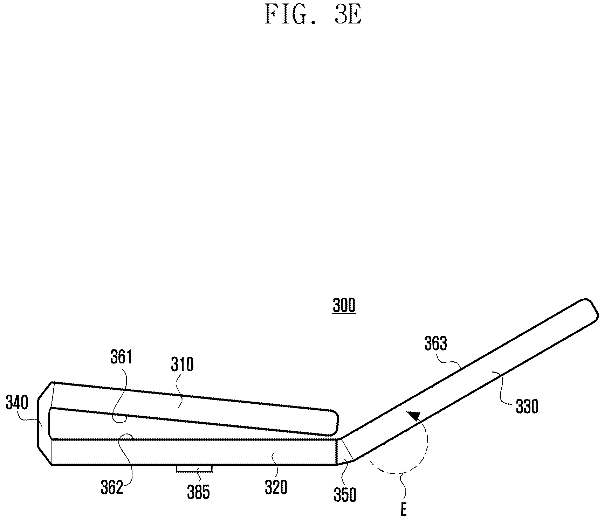

With reference to FIGS. 3A, 3C, 3D, and 3E, when all housings 310, 320, and 330 are in the unfolded state (FIG. 3A), all of the display areas 361, 362, and 363 may face in the same direction. According to an embodiment, in this state, as the first hinge assembly 340 rotates (C; FIG. 3C), the first foldable housing structure 310 and 320 may become an intermediate state. The first hinge assembly 340 may rotate further (D; FIG. 3D), and accordingly, the first foldable housing structure 310 and 320 may become a folded state, and the first display area 361 may face the second display area 362. As the second hinge assembly 350 rotates (E; FIG. 3E) while the first foldable housing structure 310 and 320 is in the folded state, the second foldable housing structure 320 and 330 may become an intermediate state. When the first foldable housing structure 310 and 320 is in the folded state and the second hinge assembly 350 is in the unfolded state or the intermediate state, only the third display area 363 may be exposed to the outside.

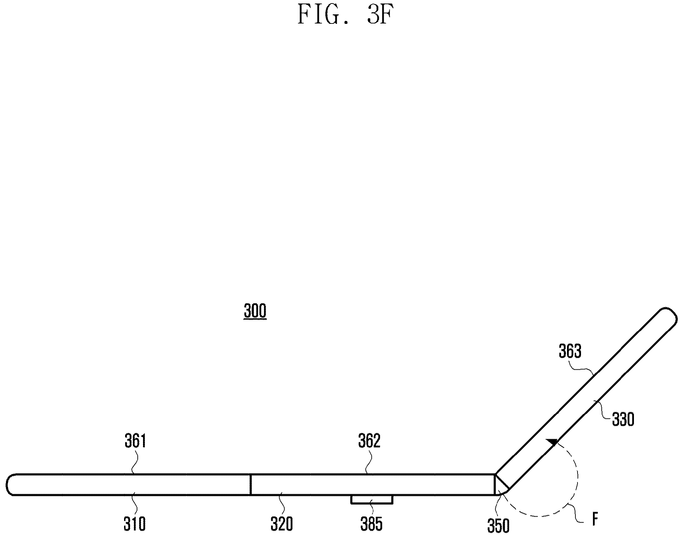

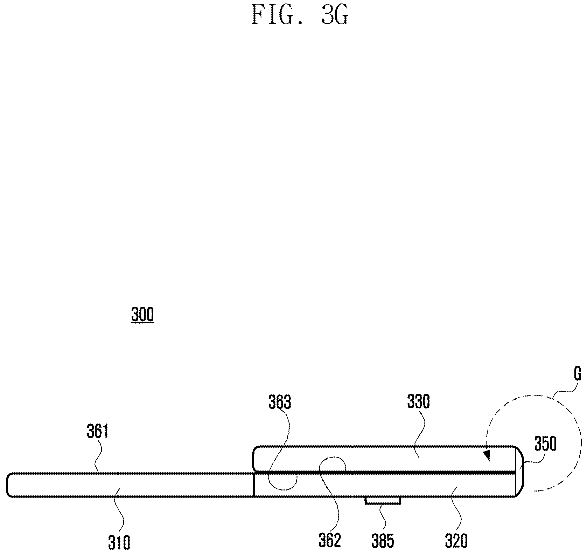

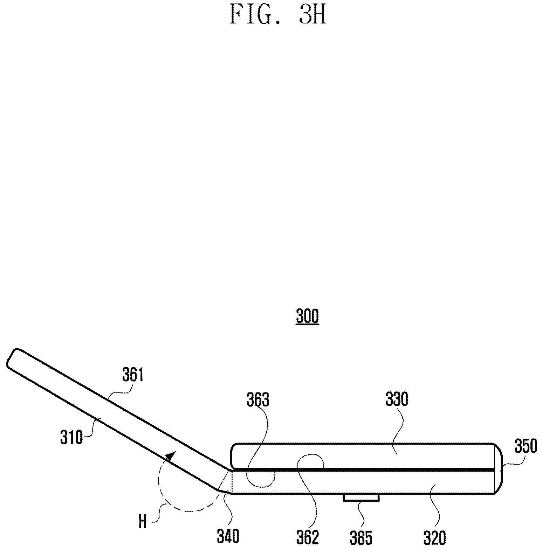

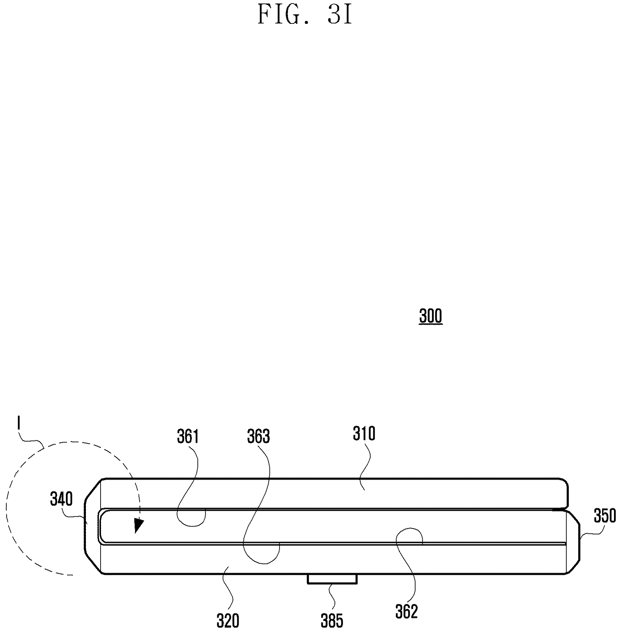

With reference to FIGS. 3A, 3F, 3G, 3H, and 3I, as the second hinge assembly 350 rotates (F; FIG. 3F) from the unfolded state (FIG. 3A) in which all housings 310, 320, and 330 are unfolded, the second foldable housing structure 320 and 330 may be switched to an intermediate state. The second hinge assembly 350 may further rotate (G; FIG. 3G), and accordingly, the second foldable housing structure 320 and 330 may become a folded state, and the third display area 363 may face the second display area 362. From the folded state of the second foldable housing structure 320 and 330, the first hinge assembly 340 may rotate (H; FIG. 3H). Accordingly, the first foldable housing structure 310 and 320 may be switched to an intermediate state. When the second foldable housing structure 320 and 330 is in a folded state and the first foldable housing structure 310 and 320 is in an unfolded state or an intermediate state, only the first display area 361 may be exposed to the outside. The first hinge assembly 340 may further rotate (I; FIG. 3I), and accordingly, all housings 310, 320, and 330 may become a folded state in a G-shape.

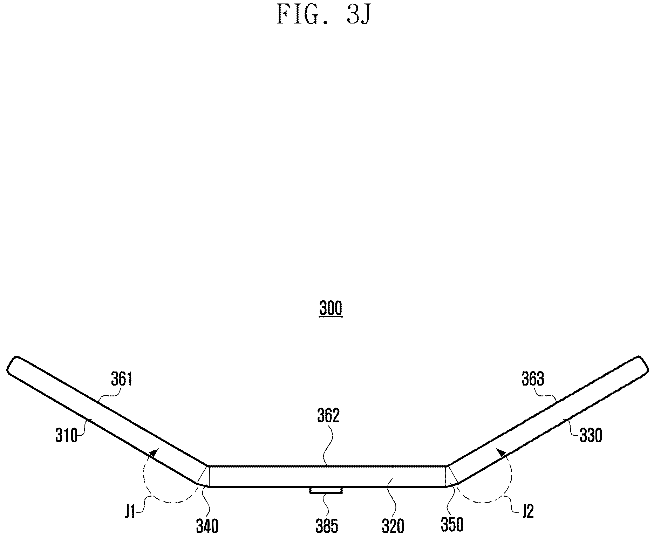

With reference to FIGS. 3A and 3J, as the first hinge assembly 340 rotates (J1; FIG. 3J) from the unfolded state (FIG. 3A) of all housings 310, 320, and 330, the first foldable housing structure 310 and 320 may become an intermediate state. As the second hinge assembly 350 rotates (J2; FIG. 3J) while the first foldable housing structure 310 and 320 is in the intermediate state, the second foldable housing structure 320 and 330 may become an intermediate state.

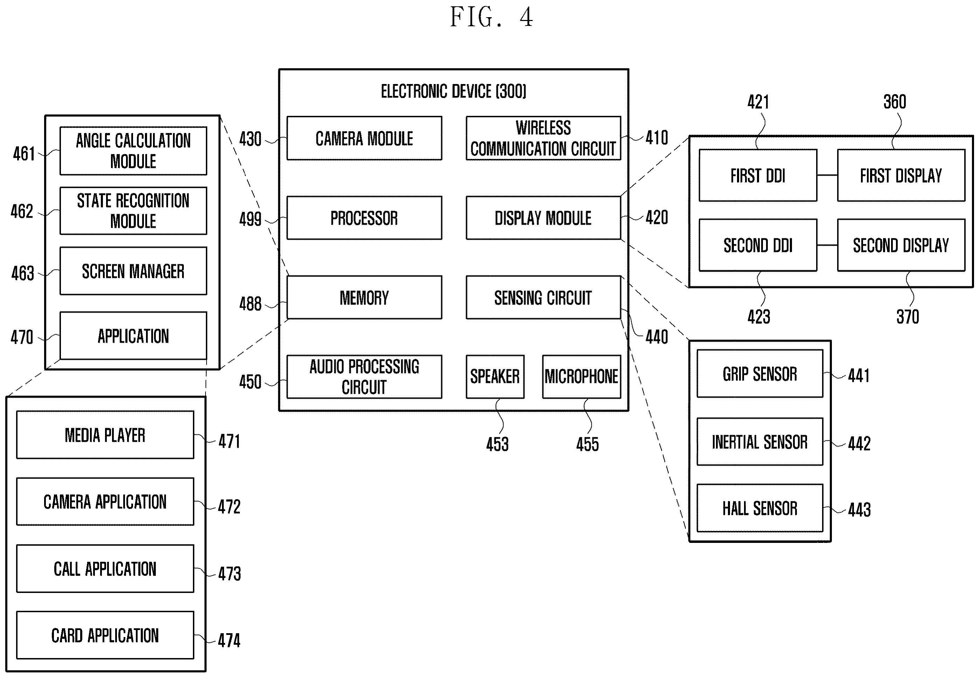

FIG. 4 is a block configuration diagram of the electronic device 300, according to an embodiment. With reference to FIG. 4, the electronic device 300 may include a wireless communication circuit 410, a display module 420, a camera module 430, a sensing circuit 440, an audio processing circuit 450, a speaker 453, a microphone 455, an angle calculation module 461, a state recognition module 462, a screen manager 463, an application 470, a memory 1288, and a processor 499. The display module 420 may include a first DDI 421, a first display 360 connected to the first DDI 421, a second DDI 423, and a second display 370 connected to the second DDI 423. The camera module 430 may include the cameras 381, 382, 383, 384, and 385.

According to an embodiment, the wireless communication circuit 410, the display module 420, the camera module 430, the sensing circuit 440, the audio processing circuit 450, the memory 488, and the processor 499 may be implemented substantially the same as the wireless communication module 192, the display module 160, the sensor module 176, the audio module 170, the memory 130, and the processor 120 in FIG. 1, respectively, and may perform the same functions. The application 470 (e.g., the application 146 in FIG. 1) may include a media player 471 stored in the memory 488 and configured to support streaming of music or video via the wireless communication circuit 410, a camera application 472 configured to support photographing using the camera module 430, a call application 473 configured to support voice calls or video calls via the wireless communication circuit 210, and a card application 474 configured to provide card information 250 (e.g., card number, CVC, expiration date, card image) from various card companies used for online financial services (e.g., payment, internet banking, account transfer) or services associated with online finance (e.g., membership subscription, discounts).

According to an embodiment, the sensing circuit 440 may generate data necessary to determine a position at which a user is holding the electronic device 300. The sensing circuit 440 may also generate data necessary to determine an angle between the housings and a state of the foldable housing structure. According to an embodiment, the sensing circuit 440 may include a grip sensor 441, an inertial sensor 442, and a hall sensor 443.

According to an embodiment, the grip sensor 441 may be electrically connected to a conductor formed on a side surface of the electronic device 300. For example, the grip sensor 441 may generate data (e.g., data representing a variation in capacitance) necessary to recognize that an external object, such as a user's hand, is in contact with the conductor, and may output the data to the processor 499. The grip sensor 441 may be disposed in an internal space of the electronic device 300, adjacent to the conductor. For example, when the electronic device 300 is formed as the multi-foldable housing structure 310, 320, and 330 in FIGS. 3A to 3J, and at least a portion of the first housing 310, at least a portion of the second housing 320, and a portion of the third housing 330 include the conductor, the grip sensor 441 may include a first grip sensor disposed adjacent to metal included in the first housing 310, a second grip sensor disposed adjacent to metal included in the second housing 320, and a third grip sensor disposed adjacent to metal included in the third housing 330. The grip sensor 441 may generate data representing a variation in capacitance, and may output the data to the processor 499. For example, the processor 499 may determine a position where a user's hand is in contact in the electronic device 300, based on data received from the grip sensor 441.

According to an embodiment, the inertial sensor 442 may generate data used to calculate a direction in which a force is applied to the foldable housing structure and/or to calculate an angle of the foldable housing structure, or to determine whether the foldable housing structure is opened or closed, and may output the data to the processor 499. For example, when the electronic device 300 has the multi-foldable housing structure 310, 320, and 330 in FIGS. 3A to 3J, the inertial sensor 442 may include a first inertial sensor (e.g., accelerometer and/or gyroscope sensor) that is disposed in an internal space of the first housing 310 and generates data corresponding to a posture (position) and/or movement (e.g., angular velocity and/or acceleration in six or nine axes) of the first housing 310, a second inertial sensor that is disposed in an internal space of the second housing 320 and generates data corresponding to a posture (position) and/or movement of the second housing 320, and a third inertial sensor that is disposed in an internal space of the third housing 330 and generates data corresponding to a posture (position) and/or movement of the third housing 330.

According to an embodiment, the hall sensor 443 may generate data used to calculate a direction in which a force is applied to the foldable housing structure and/or to calculate an angle of the foldable housing structure, or to determine whether the foldable housing structure is opened or closed, and may output the data to the processor 499. For example, the hall sensor 443 may measure a strength of a magnetic field and may generate data corresponding to the measured magnetic field strength. The hall sensor 443 may be attached to a hinge assembly or disposed in an internal space of a housing. For example, when the electronic device 300 has the multi-foldable housing structure 310, 320, and 330 in FIG. 3, the hall sensor 443 may include a first hall sensor attached to the first hinge assembly 340 and a second hall sensor attached to the second hinge assembly 350. The processor 499 may determine an angle between the housings based on data received from the inertial sensor 442 and/or the hall sensor 443. The processor 499 may determine whether the foldable housing structure is opened or closed and a state thereof, based on the determined angle.

According to an embodiment, the angle calculation module 461 may calculate an angle of the housings, based on data received from the sensing circuit 440 (e.g., the inertial sensor 442 and/or the hall sensor 443). For example, when the electronic device 300 has the multi-foldable housing structure 310, 320, and 330 in FIG. 3, the angle calculation module 461 may receive data representing a movement of the first housing 310 from the first inertial sensor, and may receive data representing a movement of the second housing 320 from the second inertial sensor. The angle calculation module 461 may calculate an angle using the data received from the two inertial sensors. The angle calculation module 461 may receive data corresponding to a magnetic field strength from the hall sensor 443 attached to the hinge assemblies 340 and 350, and may also calculate an angle using the received data. The angle calculation module 461 may also calculate an angle using the data received from the inertial sensor 442 and the data received from the hall sensor 443.

According to an embodiment, the state recognition module 462 may recognize a state of the foldable housing structure, for example, as an unfolded state, a folded state, or an intermediate state, based on the calculated angle. For example, when the calculated angle is between approximately 0 degrees and 10 degrees, the state recognition module 462 may determine the state of the corresponding foldable housing structure as a folded state. The state recognition module 462 may determine a state of the corresponding foldable housing structure as an unfolded state, when the calculated angle is approximately 180. The state recognition module 462 may determine a state of the corresponding foldable housing structure as an intermediate state, when the angle is between approximately 10 degrees and 179 degrees.

According to an embodiment, the screen manager 463 (e.g., the middleware 144 or application 146 in FIG. 1) may be configured to determine constituent elements and a layout of a screen to be displayed on the display module 420. In an embodiment, the screen manager 463 may determine an active area in which visual information is to be displayed on the displays 360 and 370, based at least on a state of the electronic device 300. Here, "based at least on" may be interpreted to mean that other factors (e.g., user input) may also serve as a basis. When the electronic device 300 is recognized as being in a state such as that of FIG. 3I by the state recognition module 462, the screen manager 463 may determine constituent elements and a layout of visual information (e.g., an application execution screen (e.g., home screen, message screen, call screen, playback screen), a status bar for enabling a user to recognize an operational state of the electronic device 300 (e.g., battery level, time), and a navigation bar for movement (navigation) between execution screens) based at least on a size of the second display 370, and may display the visual information on the second display 370. As another example, when the electronic device 300 is recognized as being in a state such as that of FIG. 3A, 3C, 3F, or 3J, the screen manager 463 may determine constituent elements and a layout of the visual information based at least on a size of the first display 360, and may display the visual information on the first display 360. As another example, when the electronic device 300 is recognized as being in a state such as that of FIG. 3D or 3E, the screen manager 463 may determine an active area as the third display area 363. As another example, when the electronic device 300 is recognized as being in a state such as that of FIG. 3G or 3F, the screen manager 463 may determine an active area as the first display area 361.

According to an embodiment, the screen manager 463 may control a foreground process (or top-layer process, non-background process) based on a state transition of the electronic device 300. Processes that reside and are running or waiting in volatile memory (e.g., RAM) may be divided into background processes and foreground processes (or top-layer processes, non-background processes). For example, a process corresponding to an application execution screen that is displayed on the display 360 or 370 and capable of interacting with a user may be classified as a foreground process. A process that is positioned hierarchically below a foreground process and is not displayed on the display 360 or 370 may be classified as a background process.

According to an embodiment, when the electronic device 300 is in a state such as that of FIG. 3A, 3C, 3F, or 3J, an execution screen may be displayed in all or a part of a display area of the first display 360. According to an embodiment, when the second foldable housing structure 320 and 330 is recognized as being in a folded state (FIG. 3G or 3H) by the state recognition module 462, the screen manager 463 may stop execution of an application (software) corresponding to the execution screen. For example, the screen manager 463 may stop execution of a foreground process (e.g., video playback, call reception notification, video recording) corresponding to an execution screen displayed on the first display 360. When the second foldable housing structure 320 and 330 is folded and then the first foldable housing structure 310 and 320 is recognized as being folded as in FIG. 3I, the screen manager 463 may display the execution screen on the second display 370 instead of the first display 360, and may resume execution of the foreground process.

According to an embodiment, in a folded state of the electronic device 300 as in FIG. 3I, an execution screen may be displayed in all or part of a display area of the second display 370. When the first foldable housing structure 310 and 320 is switched to an intermediate state or an unfolded state (see FIGS. 3G and 3H), the screen manager 463 may stop execution of an application (e.g., foreground process) corresponding to the execution screen displayed on the second display 370. When the first foldable housing structure 310 and 320 is switched to an intermediate state or an unfolded state, and then the second foldable housing structure 320 and 330 is recognized as being switched to an intermediate state or an unfolded state (see FIGS. 3A, 3C, 3F, and 3J), the screen manager 463 may display the execution screen on the first display 360 instead of the second display 370, and may resume execution of the application (e.g., foreground process).

The above-described angle calculation module 461, state recognition module 462, and screen manager 463 may be stored as software in the memory 488, and may be executed by the processor 499. Hereinafter, operations of the processor 499 according to an embodiment of the present disclosure will be described in detail. FIG. 4 may be referred to for understanding the operations described below.

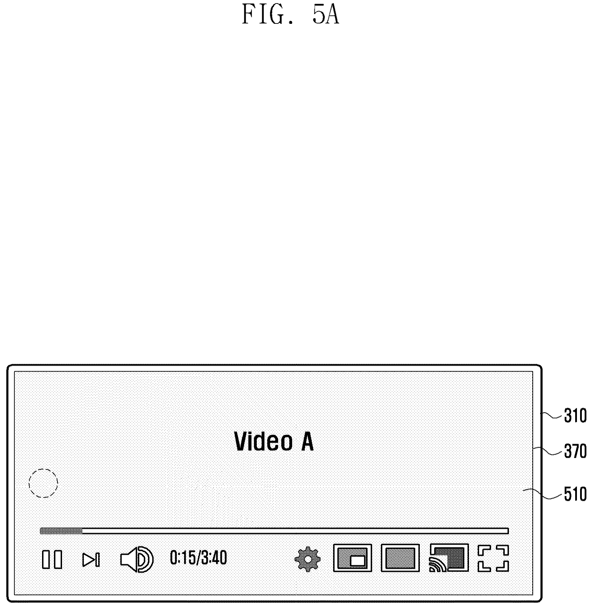

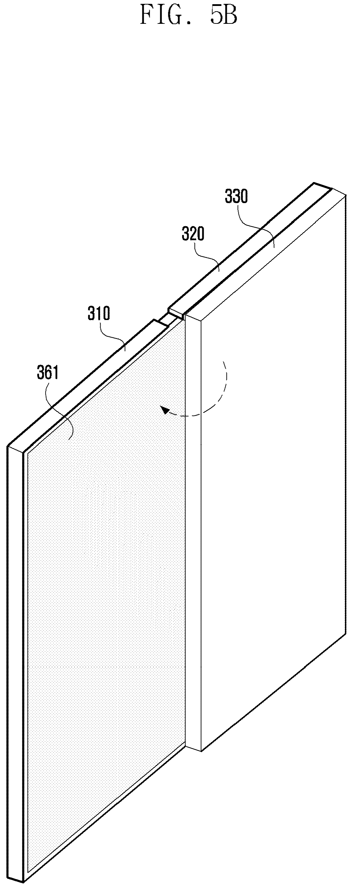

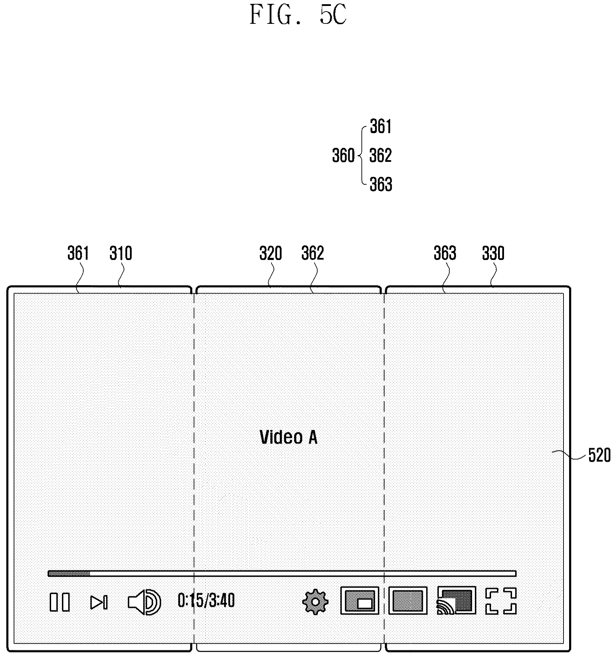

FIGS. 5A, 5B, and 5C are diagrams for describing operations of the processor 499 (see FIG. 4) for controlling execution of a media player based on a state transition in the electronic device 300, according to an embodiment.

With reference to FIG. 5A, while the electronic device 300 is in a folded state, the processor 499 may display a first execution screen 510 of the media player 471 on the second display 370 positioned on the first housing 310. According to an embodiment, the processor 499 (see FIG. 4) may control the second DDI 423 (see FIG. 4) so that a video is played back through the first execution screen 510, and may control the audio processing circuit 450 so that audio corresponding to the played-back video is played back through the speaker 453 (or an external audio output device connected to the electronic device 300 via the wireless communication circuit 410).

With reference to FIG. 5B, the processor 499 may recognize, based on data received from the sensing circuit 440, that the first foldable housing structure 310 and 320 has been switched to an unfolded state (or an intermediate state). Alternatively, the processor 499 may recognize that an angle between the first housing 310 and the second housing 320 has become greater than or equal to a first threshold angle value (e.g., approximately 179 degrees). Based on the first foldable housing structure 310 and 320 being switched from the folded state to an unfolded or intermediate state (or that the angle between the first housing 310 and the second housing 320 is greater than or equal to the first threshold angle value), the processor 499 may control the audio processing circuit 450 and the second DDI 423 to pause playback (or regeneration) of the audio and video. Accordingly, output of an audio signal through the speaker 453 and changing (in other words, refreshing) of video frames to be displayed on the second display 370 may be paused. When the audio output device for playback is an external audio output device (e.g., headset) connected to the electronic device 300 via the wireless communication circuit 410 instead of the speaker 453, the processor 499 may pause output of the audio signal to the external audio output device via the wireless communication circuit 410.

With reference to FIG. 5C, the processor (e.g., 499 in FIG. 4) may recognize, based on data received from the sensing circuit (e.g., 440 in FIG. 4), that the second foldable housing structure 320 and 330 has been switched to an unfolded state (or an intermediate state). Alternatively, the processor 499 may recognize that an angle between the second housing 320 and the third housing 330 has increased to be greater than or equal to the first threshold angle value. Based on the second foldable housing structure 320 and 330 being switched from the folded state to an unfolded or intermediate state (or that the angle between the second housing 320 and the third housing 330 is greater than or equal to the first threshold angle value), the processor 499 may deactivate the second display 370 (e.g., a state of turning off the screen by stopping power supply to the second display 370), and may display a second execution screen 520 of the media player 471 on the first display 360. The processor 499 may control the first DDI 421 so that video playback through the second execution screen 520 is resumed, and may control the audio processing circuit 450 so that audio playback corresponding to the played-back video is resumed through the speaker 453 (or an external audio output device connected to the electronic device via the wireless communication circuit 410).

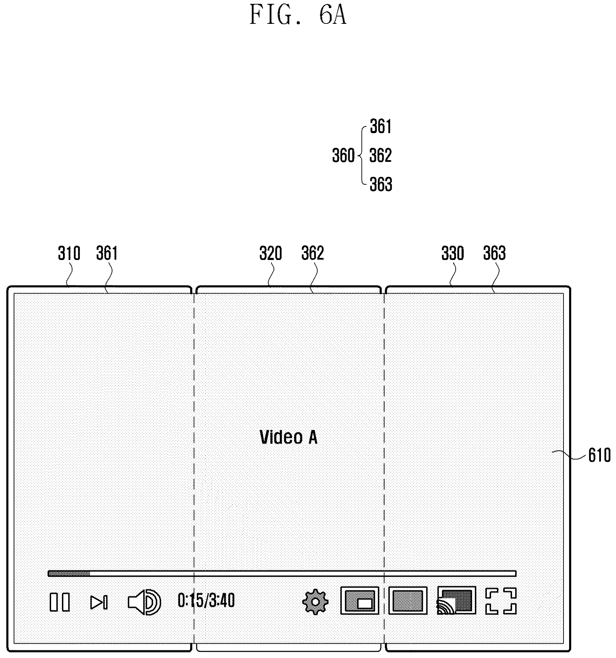

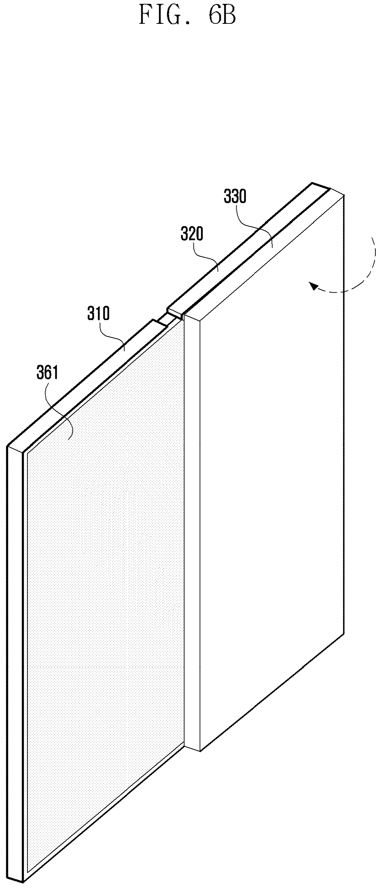

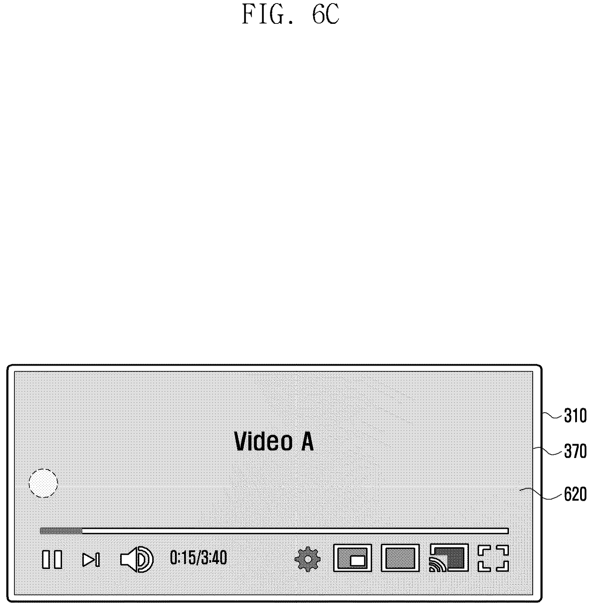

FIGS. 6A, 6B, and 6C are diagrams for describing operations of the processor 499 for controlling execution of a media player based on a state transition in the electronic device 300, according to an embodiment.

With reference to FIG. 6A, while the electronic device 300 is in an unfolded state (or a partially unfolded state, such as FIG. 3C, 3F, or 3J), the processor 499 may display a first execution screen 610 of the media player 471 on at least a portion of the first display 360. The processor 499 may control the first DDI 421 so that a video is played back through the first execution screen 610, and may control the audio processing circuit 450 so that audio corresponding to the played-back video is played back through the speaker 453 (or an external audio output device connected to the electronic device via the wireless communication circuit 410).

With reference to FIG. 6B, the processor 499 may recognize, based on data received from the sensing circuit 440, that the second foldable housing structure 320 and 330 has been switched to a folded state. Alternatively, the processor 499 may recognize, based on data received from the sensing circuit 440, that an angle between the second housing 320 and the third housing 330 has become smaller than or equal to a designated second threshold angle value (e.g., approximately 10 degrees). Based on the second foldable housing structure 320 and 330 being switched to a folded state (or that the angle between the second housing 320 and the third housing 330 is less than or equal to the second threshold angle value), the processor 499 may pause playback (or regeneration) of the audio and video by controlling the audio processing circuit 450 and the first DDI 421. Accordingly, output of an audio signal through the speaker 453, and changing (in other words, refreshing) of video frames to be displayed on the first display 360, may be paused. When the audio output device for playback is an external audio output device (e.g., headset) connected to the electronic device 300 via the wireless communication circuit 410 instead of the speaker 453, the processor 499 may pause output of the audio signal to the external audio output device via the wireless communication circuit 410.

With reference to FIG. 6C, the processor 499 may recognize, based on data received from the sensing circuit 440, that the first foldable housing structure 310 and 320 has been switched to a folded state. Alternatively, the processor 499 may recognize that an angle between the first housing 310 and the second housing 320 has become smaller than or equal to the second threshold angle value. Based on the first foldable housing structure 310 and 320 being switched to a folded state (or that the angle between the first housing 310 and the second housing 320 is less than or equal to the second threshold angle value), the processor 499 may deactivate the first display 360 (e.g., a state in which the screen is turned off by stopping power supply to the first display 360, or a state in which power supply is maintaining to the first display 360 but visual information is not being displayed on the display 360), and may display a second execution screen 620 of the media player 471 on the second display 370. The processor 499 may control the second DDI 423 so that video playback through the second execution screen 520 is resumed, and may control the audio processing circuit 450 so that audio playback corresponding to the played-back video is resumed through the speaker 453 (or an external audio output device connected to the electronic device via the wireless communication circuit 410).

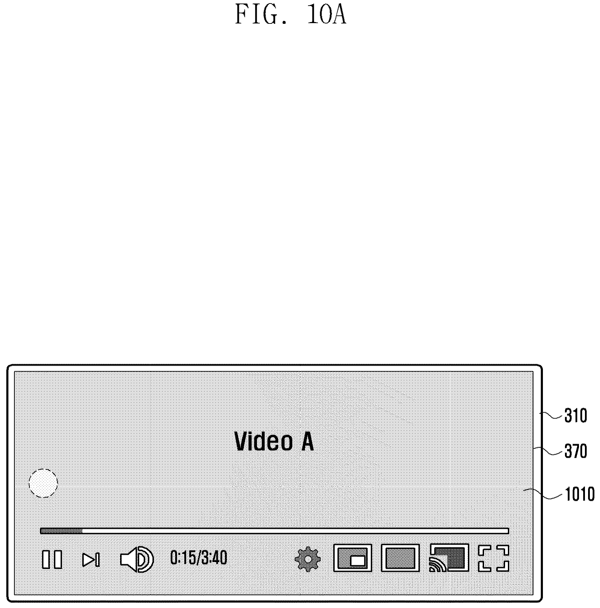

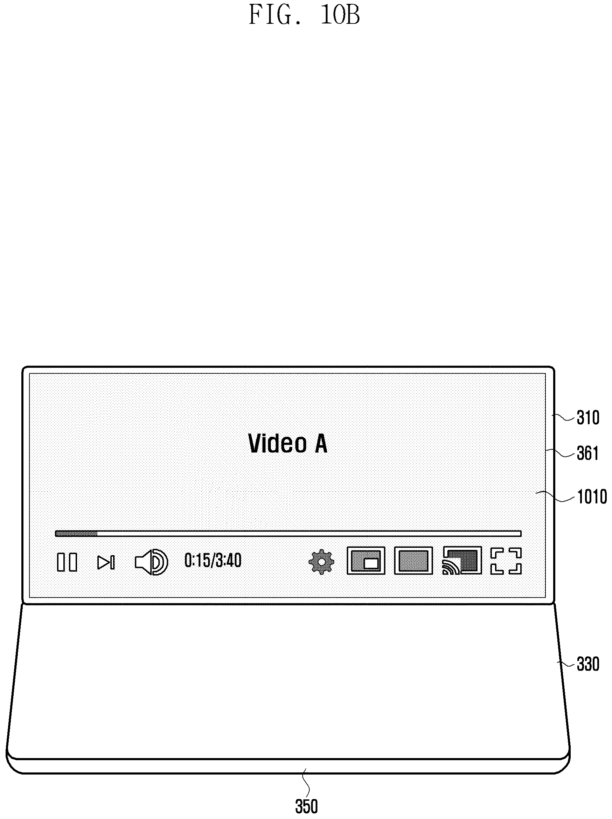

According to an embodiment, the processor 499 may provide a setting menu via the display 360 or 370 that allows a user to determine whether to execute a pause of playback upon state switching. When a pause is deactivated through the setting menu, the processor 499 may maintain playback even if the first foldable housing structure 310 and 320 is switched from a folded state to an unfolded (or intermediate) state (see FIG. 5B) or the second foldable housing structure 320 and 330 is switched from an unfolded (or intermediate) state to a folded state (see FIG. 6B). When a pause is deactivated through the setting menu, an embodiment to be described below with reference to FIGS. 10 to 12 may be executed.

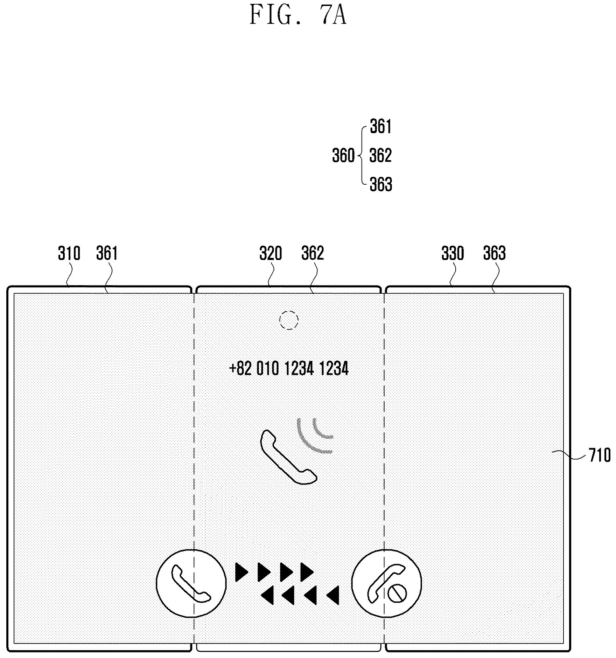

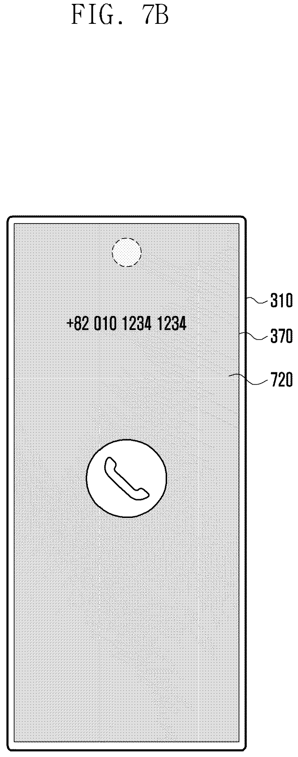

FIGS. 7A and 7B are diagrams for describing operations of the processor 499 for controlling execution of a call application based on a state transition in the electronic device 300, according to an embodiment.

With reference to FIG. 7A, while the electronic device 300 is in an unfolded state (or a partially unfolded state, such as FIG. 3C, 3F, or 3J), the processor 499 may display a first execution screen 710 of the call application 473 through at least a portion of the first display 360. According to an embodiment, the processor 499 may control the audio processing circuit 450 to output a sound notifying of call reception through the speaker 453 (or an external audio output device connected to the electronic device via the wireless communication circuit 410).

According to an embodiment, the processor 499 may recognize, based on data received from the sensing circuit 440, that the second foldable housing structure 320 and 330 has been switched to a folded state (see FIG. 3G). Alternatively, the processor 499 may recognize, based on data received from the sensing circuit 440, that an angle between the second housing 320 and the third housing 330 has become smaller than or equal to a designated second threshold angle value (e.g., approximately 10 degrees). Based on the second foldable housing structure 320 and 330 being switched to a folded state (or that the angle between the second housing 320 and the third housing 330 is less than or equal to the second threshold angle value), the processor 499 may stop output of the sound through the speaker 453 (or the wireless communication circuit 410). According to an embodiment, when the electronic device 300 is vibrating to notify a user of call reception, the processor 499 may stop driving of a vibration motor (e.g., the haptic module 179).

With reference to FIG. 7B, the processor 499 may recognize, based on data received from the sensing circuit 440, that the first foldable housing structure 310 and 320 has been switched to a folded state. Alternatively, the processor 499 may recognize that an angle between the first housing 310 and the second housing 320 has become smaller than or equal to the second threshold angle value. Based on the first foldable housing structure 310 and 320 being switched to a folded state (or that the angle between the first housing 310 and the second housing 320 is less than or equal to the second threshold angle value), the processor 499 may deactivate the first display 360 (e.g., a state in which the screen is turned off by stopping power supply to the first display 360), and may display a second execution screen 720 of the call application 473 on the second display 370. In addition, based on the first foldable housing structure 310 and 320 being switched to a folded state (or that the angle between the first housing 310 and the second housing 320 is less than or equal to the second threshold angle value), the processor 499 may receive a voice signal from an external electronic device of a call counterpart via the wireless communication circuit 410 and may output the voice signal through the speaker 453 (or an external audio output device connected to the electronic device via the wireless communication circuit 410) without a user input. When the call is a video call, the processor 499 may receive a video signal from the external electronic device via the wireless communication circuit 410 and may display a video call screen corresponding to the video signal through at least a portion of the second display 370 by including the video call screen in the second execution screen 720.

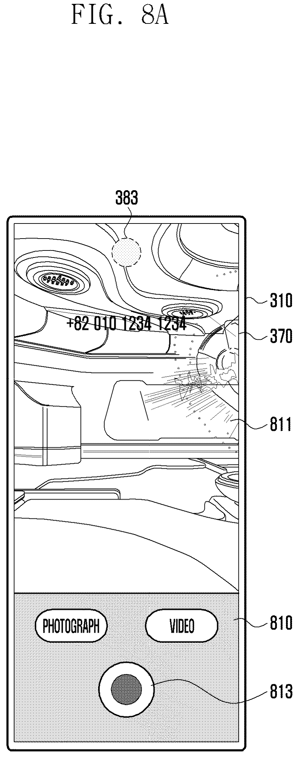

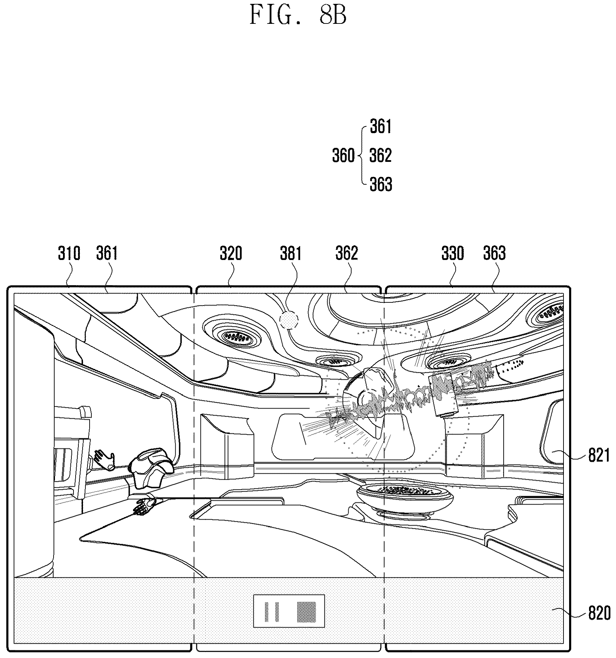

FIGS. 8A and 8B are diagrams for describing operations of the processor 499 for controlling execution of the camera application based on a state transition in the electronic device 300, according to an embodiment.

With reference to FIG. 8A, while the electronic device 300 is in a folded state, the processor 499 may display a first execution screen 810 of the camera application 472 on the second display 370 positioned on the first housing 310. According to an embodiment, the processor 499 may receive and process (e.g., reduce resolution) an image from the second camera 382 (additionally, the fourth camera 384 and/or the fifth camera 385) or the third camera 383, to generate a preview image 811, and may display the preview image 811 on the second display 370 by including the preview image 811 in the first execution screen 810. When video recording is selected (e.g., based on a record button 813 being touched), the processor 499 may perform video recording and audio recording using the corresponding camera and the audio processing circuit 450 used for image preview. For example, the processor 499 may generate a video file by processing (e.g., compressing) an original image corresponding to the preview image 811 (e.g., the image received from the corresponding camera) and may store it in the memory 488. Additionally, the processor 499 may control the audio processing circuit 450 to receive and process (e.g., encode) an audio signal from the microphone 455, and may store the audio file received from the audio processing circuit 450 as an audio processing result, together with the video file, in the memory 488.

The processor 499 may recognize, based on data received from the sensing circuit 440, that the first foldable housing structure 310 and 320 has been switched to an intermediate state (see FIG. 3H) or an unfolded state (see FIG. 3G). Alternatively, the processor 499 may recognize, based on data received from the sensing circuit 440, that an angle between the first housing 310 and the second housing 320 has become greater than or equal to a designated first threshold angle value (e.g., approximately 179 degrees). Based on the first foldable housing structure 310 and 320 being switched to an intermediate state or an unfolded state (or the angle between the first housing 310 and the second housing 320 being greater than or equal to the first threshold angle value), the preview of an image through the second display 370 may be stopped. Additionally, the processor 499 may stop video recording and audio recording.

With reference to FIG. 8B, the processor 499 may recognize, based on data received from the sensing circuit 440, that the second foldable housing structure 320 and 330 has been switched to an intermediate state (see FIGS. 3F and 3J) or an unfolded state (see FIGS. 3A and 3C). Alternatively, the processor 499 may recognize, based on data received from the sensing circuit 440, that an angle between the second housing 320 and the third housing 320 has become greater than or equal to the first threshold angle value (e.g., approximately 179 degrees). Based on the second foldable housing structure 320 and 330 being switched from a folded state to an intermediate state or an unfolded state (or the angle between the second housing 320 and the third housing 330 being greater than or equal to the first threshold angle value), the processor 499 may display a second execution screen 820 of the camera application 472 on the display 360. According to an embodiment, the processor 499 may receive and process (e.g., reduce resolution) an image to generate a preview image 821, and may display the preview image 821 on the first display 360 by including the preview image 821 in the second execution screen 820. When video recording and audio recording were being performed before the state transition, the processor 499 may resume video recording and audio recording using the corresponding camera used for image preview and the audio processing circuit 450. For example, when the camera used for recording in the folded state (see FIG. 8A) of the electronic device 300 is the third camera 383, upon switching the electronic device 300 to the unfolded state (see FIG. 8C), the processor 499 may resume video recording using the first camera 381 instead of the third camera 383.

The processor 499 may perform the same operation as described above even when the electronic device 300 is switched from the unfolded state (see FIG. 8B) to the folded state (see FIG. 8A).

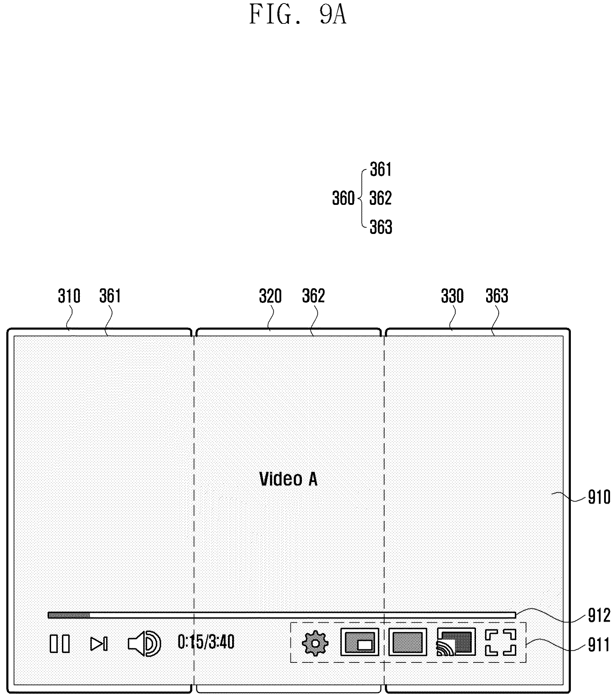

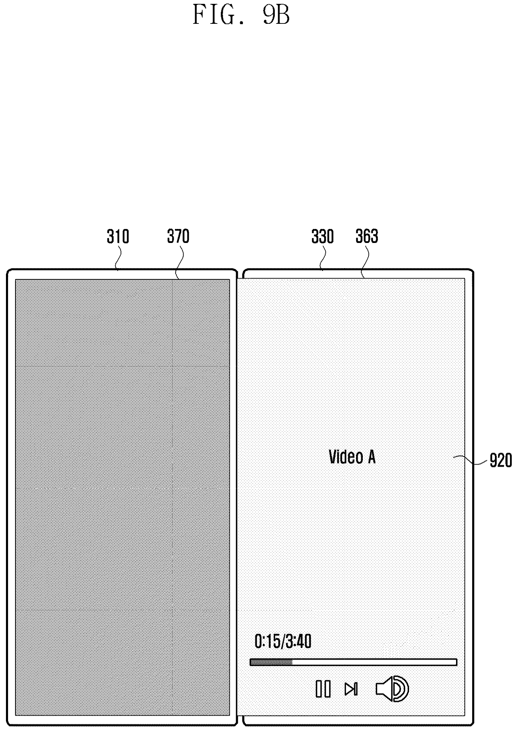

FIGS. 9A and 9B are diagrams for describing operations of the processor 499 for reconfiguring the layout of the media player execution screen based on a state transition of the electronic device 300, according to an embodiment.

With reference to FIG. 9A, while the electronic device 300 is in an unfolded state (or a partially unfolded state, such as in FIGS. 3C, 3F, or 3J), the processor 499 may display a portion of a first execution screen 910 of the media player 471 on the first display area 361 of the first display 360, another portion thereof on the second display area 362, and yet another portion thereof on the third display area 363. According to an embodiment, the processor 499 may control the first DDI 421 so that a video is played back through the first execution screen 910, and may control the audio processing circuit 450 so that the audio corresponding to the played-back video is played back through the speaker 453 (or an external audio output device connected to the electronic device via the wireless communication circuit 410).

With reference to FIG. 9B, the processor 499 may recognize, based on data received from the sensing circuit 440, that the first foldable housing structure 310 and 320 has been switched to a folded state (see FIG. 3D). Alternatively, the processor 499 may recognize, based on data received from the sensing circuit 440, that the angle between the first housing 310 and the second housing 320 has become smaller than or equal to the second threshold angle value (e.g., approximately 10 degrees). When the first foldable housing structure 310 and 320 is switched to a folded state or the angle between the first housing 310 and the second housing 320 is less than or equal to the second threshold angle value, the processor 499 may generate a second execution screen 920 based on the size of the third display area 363, and may display it on the third display area 363. For example, the processor 499 may generate the second execution screen 920 by reducing the size of the first execution screen 910 to fit the size of the third display area 363. According to an embodiment, the processor 499 may generate the second execution screen 920 by omitting some elements 911 among the user interface (UI) elements for user interaction in the first execution screen 910, and by reducing the playback bar 912.

FIGS. 10A and 10B are diagrams for describing operations of the processor 499 for allowing a user to seamlessly view a media player execution screen when a state of the electronic device 300 is changed, according to an embodiment.

With reference to FIG. 10A, while the electronic device 300 is in a folded state, the processor 499 may display an execution screen 1010 of the media player 471 on the second display 370 positioned on the first housing 310. The processor 499 may recognize a posture of the electronic device 300 based on data received from the sensing circuit 440, and may configure the execution screen 1010 to correspond to the recognized posture and display it on the second display 370. For example, when the recognized posture is a first posture corresponding to a first display mode (e.g., landscape mode), as illustrated, the processor 499 may configure the execution screen 1010 in the first display mode and display it on the second display 370. According to an embodiment, when the recognized posture is a second posture corresponding to a second display mode (e.g., portrait mode), the processor 499 may configure the execution screen of the media player 471 in the portrait mode (e.g., corresponding to the second execution screen 920 in FIG. 9) and display it on the second display 370. The processor 499 may control the second DDI 423 so that a video is played back through the execution screen 1010, and may control the audio processing circuit 450 so that audio corresponding to the played-back video is played back through the speaker 453 (or an external audio output device connected to the electronic device via the wireless communication circuit 410). According to an embodiment, even if the recognized posture is the first posture, when automatic mode transition is not set, the processor 499 may configure the execution screen in the second display mode and display it on the second display 370. Even if the recognized posture is the second posture, when the execution screen of the media player 471 is set to be maximized, the processor 499 may configure the execution screen in the first display mode and display it on the second display 370.

With reference to FIG. 10B, the processor 499 may recognize, based on data received from the sensing circuit 440, that the first foldable housing structure 310 and 320 has been switched from a folded state to an intermediate state (see FIG. 3H). Alternatively, the processor 499 may recognize, based on data received from the sensing circuit 440, that an angle between the first housing 310 and the second housing 320 has become greater than or equal to the second threshold angle value (e.g., approximately 10 degrees). According to an embodiment, based on data received from the sensing circuit 440, the processor 499 may recognize that the user is holding the electronic device 400 and that the first foldable housing structure (310, 320) has been changed from a foldable state (portable mode) to an intermediate state (tabletop mode). Additionally, based on data received from the sensing circuit 440, the processor 499 may recognize that the user is not holding the electronic device 400 in the intermediate state. According to an embodiment, when the first foldable housing structure 310 and 320 is switched from the folded state to the intermediate state (see FIG. 3H), or when the angle between the first housing 310 and the second housing 320 becomes greater than or equal to the second threshold angle value, or when the electronic device 400 is switched from portable mode to tabletop mode, the processor 499 may display the execution screen 1010 on at least a portion of the first display area 361. The processor 499 may maintain the layout of the execution screen 1010 as is, while adjusting the size of the execution screen 1010 to fit the size of the first display area 361.

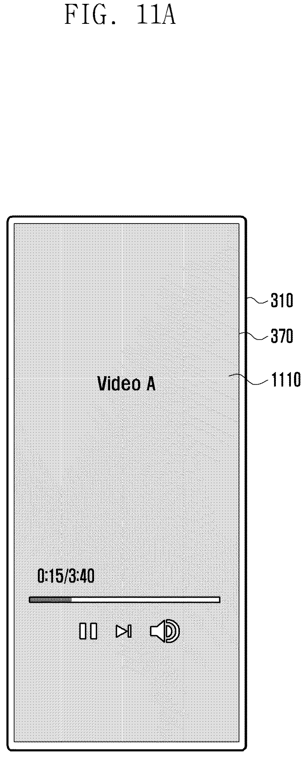

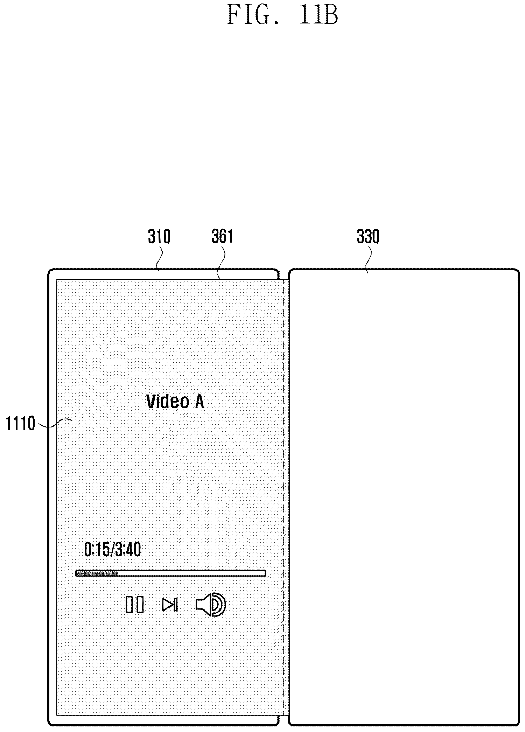

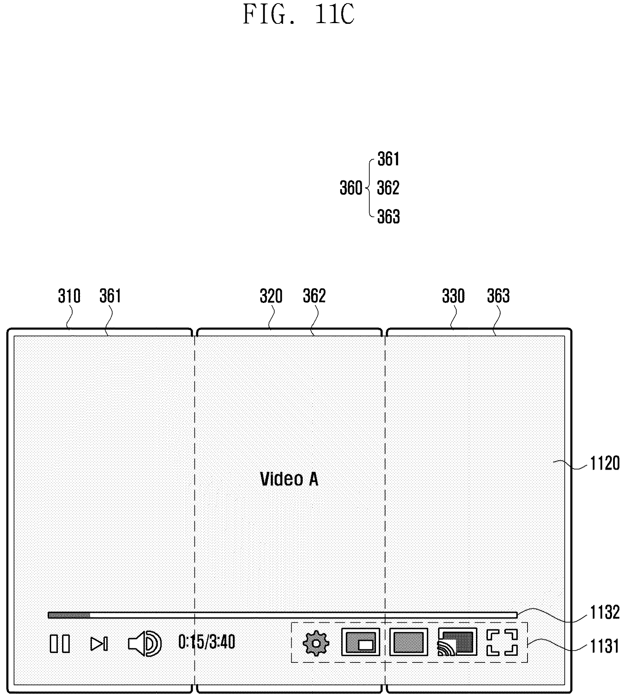

FIGS. 11A, 11B, and 11C are diagrams for describing operations of the processor 499 for allowing a user to seamlessly view a media player execution screen when a state of the electronic device 300 is changed, according to an embodiment.

With reference to FIG. 11A, while the electronic device 300 is in a folded state, the processor 499 may display a first execution screen 1110 of the media player 471 on the second display 370 positioned on the first housing 310. The processor 499 may recognize a posture of the electronic device 300 based on data received from the sensing circuit 440, and may configure the first execution screen 1110 to correspond to the recognized posture and display it on the second display 370. For example, when the recognized posture is the second posture, the processor 499 may configure the first execution screen 1110 in the second display mode and display it on the second display 370. The processor 499 may control the second DDI 423 such that a video is played back through the first execution screen 1110, and may control the audio processing circuit 450 such that audio corresponding to the played-back video is played back through the speaker 453 (or an external audio output device connected to the electronic device via the wireless communication circuit 410).

With reference to FIG. 11B, the processor 499 may recognize, based on data received from the sensing circuit 440, that the first foldable housing structure 310 and 320 has been switched from a folded state to an intermediate state (see FIG. 3H) or an unfolded state (see FIG. 3G). Alternatively, the processor 499 may recognize, based on data received from the sensing circuit 440, that an angle between the first housing 310 and the second housing 320 has become greater than or equal to the first threshold angle value (e.g., approximately 179 degrees). When the first foldable housing structure 310 and 320 has been switched from the folded state to the intermediate state (or the unfolded state), or the angle between the first housing 310 and the second housing 320 is greater than or equal to the first threshold angle value, the processor 499 may display the first execution screen 1110 on the first display area 361. The processor 499 may maintain the layout of the first execution screen 1110 as is and adjust a size of the first execution screen 1110 to fit the size of the first display area 361.

With reference to FIG. 11C, the processor 499 may recognize, based on data received from the sensing circuit 440, that the second foldable housing structure 320 and 330 has been switched from a folded state to an intermediate state (see FIG. 3F or 3J) or an unfolded state (see FIG. 3A or 3C). Alternatively, the processor 499 may recognize, based on data received from the sensing circuit 440, that an angle between the second housing 320 and the third housing 330 has become greater than or equal to the first threshold angle value (e.g., approximately 179 degrees). When the second foldable housing structure 320 and 330 has been switched from the folded state to the intermediate state (or the unfolded state), or the angle between the second housing 320 and the third housing 330 is greater than or equal to the first threshold angle value, the processor 499 may generate a second execution screen 1120 based on the size of the first display 360 and may display it on the first display 360. For example, the processor 499 may generate the second execution screen 1120 by enlarging the first execution screen 1110 to fit the size of the first display 360, while maintaining the layout of the first execution screen 1110 as is. The processor 499 may generate the second execution screen 1120 by adding a UI 1131 for user interaction to the first execution screen 1110 and enlarging a playback bar 1132 in the second execution screen 1120.

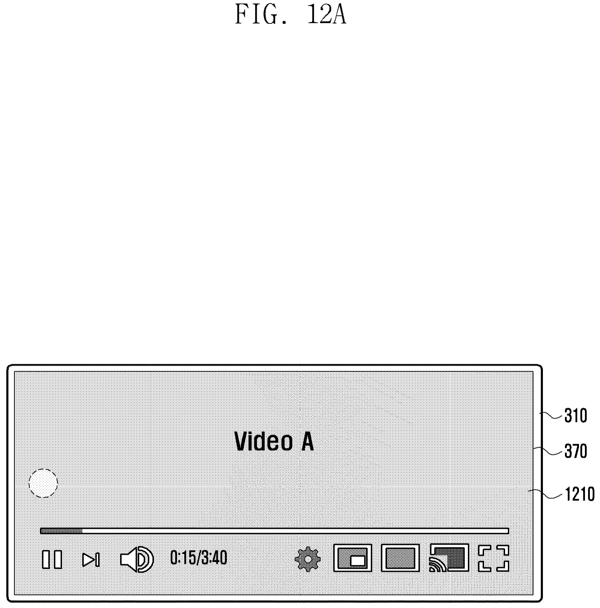

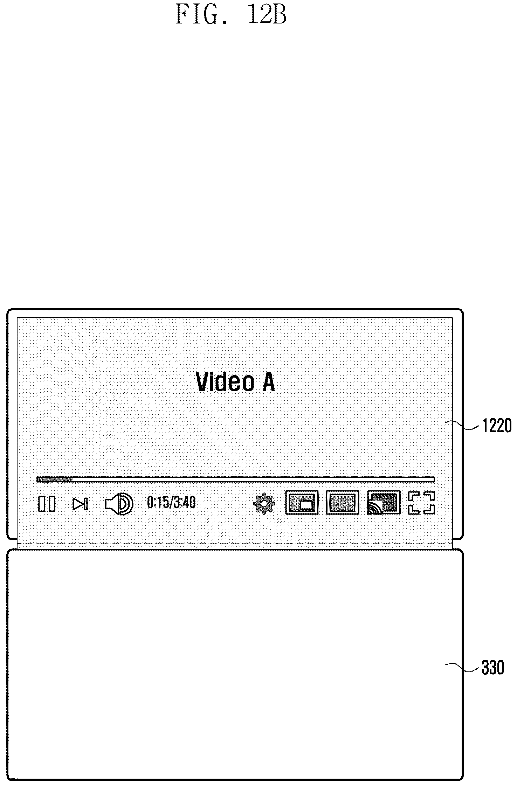

FIGS. 12A and 12B are diagrams for describing operations of the processor 499 for allowing a user to seamlessly view a media player execution screen when a state of the electronic device 300 is changed.

With reference to FIG. 12A, the processor 499 may recognize, based on data received from the sensing circuit 440, that the electronic device 300 is in a second posture while in a folded state. Based on the electronic device 300 being in the folded state and in the second posture, the processor 499 may configure a first execution screen 1210 of the media player 471 to correspond to a first display mode and display it on the second display 370 positioned on the first housing 310. The processor 499 may control the second DDI 423 such that a video is played back through the first execution screen 1210, and may control the audio processing circuit 450 such that audio corresponding to the played-back video is played back through the speaker 453 (or an external audio output device connected to the electronic device via the wireless communication circuit 410).

With reference to FIG. 12B, the processor 499 may recognize, based on data received from the sensing circuit 440, that the first foldable housing structure 310 and 320 has been switched to an intermediate state (see FIG. 3F or 3J) or an unfolded state (see FIG. 3A or 3C). Alternatively, the processor 499 may recognize, based on data received from the sensing circuit 440, that an angle between the first housing 310 and the second housing 320 has become greater than or equal to the first threshold angle value (e.g., approximately 179 degrees). When the first foldable housing structure 310 and 320 has been switched from the folded state to the intermediate state (or the unfolded state), or the angle between the first housing 310 and the second housing 320 is greater than or equal to the first threshold angle value, the processor 499 may reconfigure the first execution screen 1210 based on the size of the first display area 361, generate a second execution screen 1220, and display it on the first display area 361. For example, the processor 499 may generate the second execution screen 1220 by adjusting the size of the first execution screen 1210 to fit the size of the first display area 361, while maintaining the layout of the first execution screen 1110 as is.

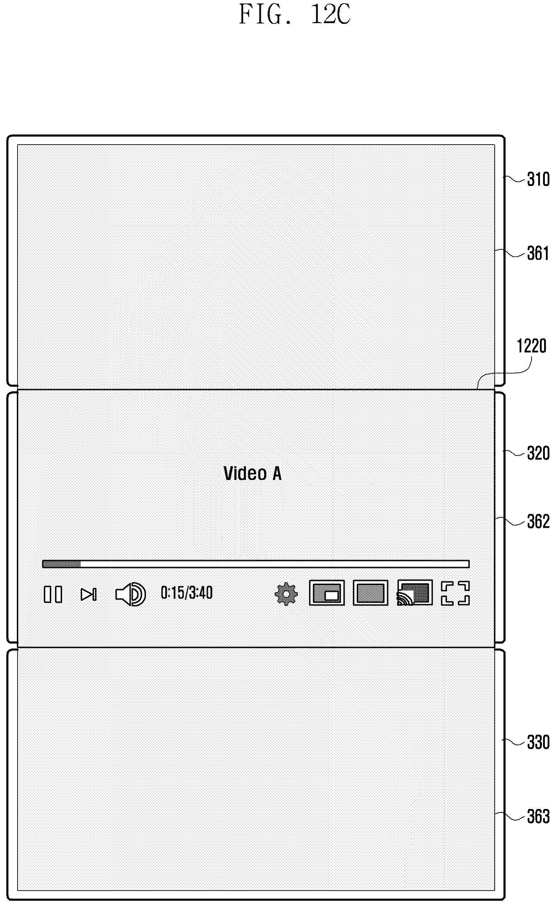

With reference to FIG. 12C, the processor 499 may recognize, based on data received from the sensing circuit 440, that the second foldable housing structure 320 and 330 has been switched from a folded state to an intermediate state (see FIG. 3F or 3J) or an unfolded state (see FIG. 3A or 3C). Alternatively, the processor 499 may recognize, based on data received from the sensing circuit 440, that an angle between the second housing 320 and the third housing 330 has become greater than or equal to the first threshold angle value (e.g., approximately 179 degrees). Based on the second foldable housing structure 320 and 330 being switched from a folded state to an intermediate state (or an unfolded state), or the angle between the second housing 320 and the third housing 330 being greater than or equal to the first threshold angle value, the processor 499 may change a display position of the second execution screen 1220. For example, the processor 499 may move and display the second execution screen 1220 to the second display area 362.

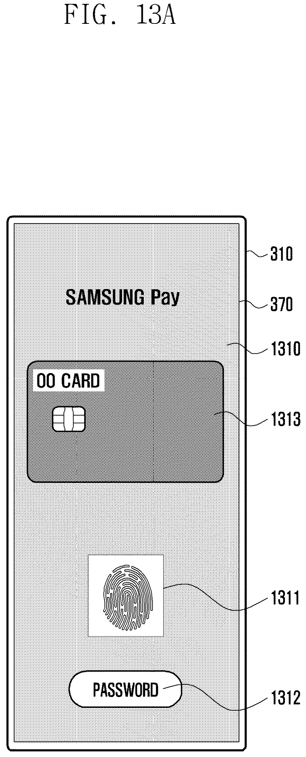

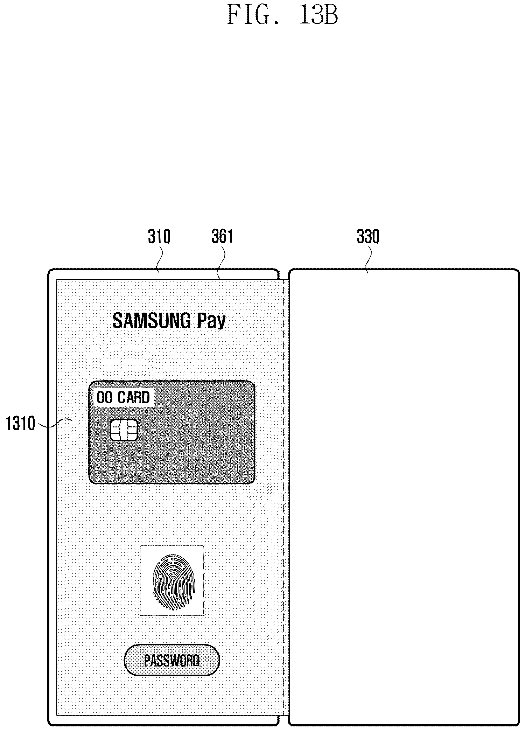

FIGS. 13A and 13B are diagrams for describing operations of the processor 499 for changing a display position of a card execution screen based on a state transition of the electronic device 300, according to an embodiment.

With reference to FIG. 13A, while the electronic device 300 is in a folded state, the processor 499 may display an execution screen 1310 of a card application 474 on the second display 370 positioned on the first housing 310. For example, the processor 499 may include a UI element 1311 for fingerprint recognition, a UI element 1312 for password input, and a card image 1313 in the execution screen 1310, and may display them on the second display 370.

With reference to FIG. 13B, the processor 499 may recognize, based on data received from the sensing circuit 440, that the first foldable housing structure 310 and 320 has been switched from a folded state to an intermediate state (see FIG. 3H) or an unfolded state (see FIG. 3G). Alternatively, the processor 499 may recognize, based on data received from the sensing circuit 440, that a portrait mode is maintained and the angle between the first housing 310 and the second housing 320 has become greater than or equal to the first threshold angle value (e.g., approximately 179 degrees). When the first foldable housing structure 310 and 320 has been switched from the folded state to the intermediate state (or the unfolded state), or the angle between the first housing 310 and the second housing 320 is equal to or greater than the first threshold angle value, the processor 499 may display the execution screen 1310 on the first display area 361. The processor 499 may maintain the layout of the execution screen 1310 as is, while adjusting the size of the execution screen 1310 to fit the size of the first display area 361.

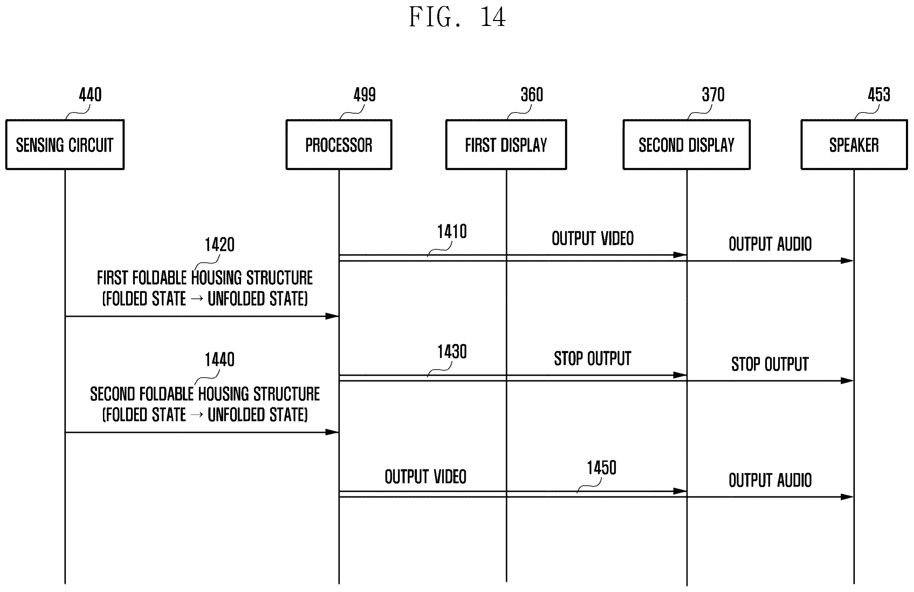

FIG. 14 is a flowchart for describing operations performed by the processor 499 while the electronic device 300 is changed from a folded state to an unfolded state, according to an embodiment.

In operation 1410, the processor 499 may control the second DDI 423 to output a video to the second display 370 (see FIG. 5A), and may control the audio processing circuit 450 to output audio to the speaker 453.

While the video and audio are being output, in operation 1420, the processor 499 may recognize, based on data received from the sensing circuit 440, that the first foldable housing structure 310 and 320 has been switched from a folded state to an intermediate state or an unfolded state.

In operation 1430, based on recognition of the state transition in operation 1420, the processor 499 may control the second DDI 423 and the audio processing circuit 450 to stop the output of the video and audio.

While the video and audio output is stopped, in operation 1440, the processor 499 may recognize, based on data received from the sensing circuit 440, that the second foldable housing structure 320 and 330 has been switched from a folded state to an intermediate state or an unfolded state.

In operation 1450, based on recognition of the state transition in operation 1440, the processor 499 may control the first DDI 421 to output the video to the first display 360 (see FIG. 5C), and may control the audio processing circuit 450 to output the audio to the speaker 453.

In an embodiment, in operations 1410 and 1450, the processor 499 may output the audio to an external audio output device connected to the electronic device 300 via the wireless communication circuit 410, instead of the speaker 453.

In an embodiment, operation 1430 may be performed when the first foldable housing structure 310 and 320 is switched from a folded state to an intermediate state, or when the angle between the first housing 310 and the second housing 320 is greater than or equal to the first threshold angle value (e.g., approximately 179 degrees). Operation 1450 may be performed when the second foldable housing structure 320 and 330 is switched from a folded state to an intermediate state, or when the angle between the second housing 320 and the third housing 330 is greater than or equal to the first threshold angle value.

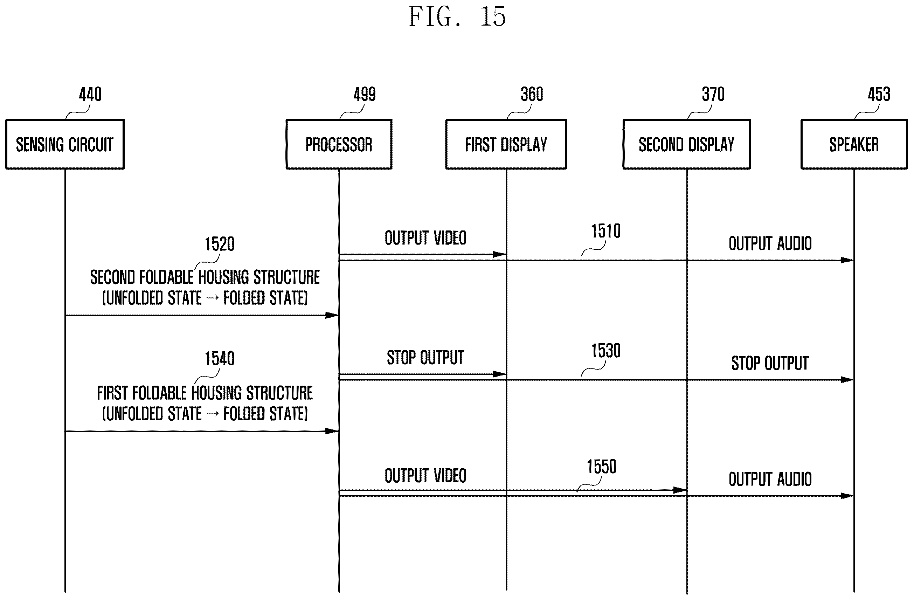

FIG. 15 is a flowchart for describing operations performed in the electronic device 300 while the electronic device 300 is changed from an unfolded state to a folded state, according to an embodiment.

In operation 1510, the processor 499 may control the first DDI 421 to output a video to the first display 360 (see FIG. 6A), and may control the audio processing circuit 450 to output audio to the speaker 453.

While the video and audio are being output, in operation 1520, the processor 499 may recognize, based on data received from the sensing circuit 440, that the second foldable housing structure 320 and 330 has been switched from an unfolded state to a folded state.

In operation 1530, based on recognition of the state transition in operation 1520, the processor 499 may control the first DDI 421 and the audio processing circuit 450 to stop the output of the video and audio.

While the video and audio output is stopped, in operation 1540, the processor 499 may recognize, based on data received from the sensing circuit 440, that the first foldable housing structure 310 and 320 has been switched from an unfolded state to a folded state.

In operation 1550, the processor 499 may control the second DDI 423 to output video to at least a portion of the second display 370 (see FIG. 6C), based on the recognition of state transition in operation 1540, and may control the audio processing circuit 450 to output audio to the speaker 453.

In an embodiment, in operations 1510 and 1550, the processor 499 may output the audio to an external audio output device connected to the electronic device 300 via the wireless communication circuit 410, instead of the speaker 453.

In an embodiment, operation 1530 may be performed when the second foldable housing structure 320 and 330 is switched from an unfolded state to an intermediate state, or when the angle between the second housing 320 and the third housing 330 is less than or equal to the second threshold angle value (e.g., approximately 10 degrees). Operation 1450 may be performed when the second foldable housing structure 320 and 330 becomes a folded state and then the first foldable housing structure 310 and 320 becomes a folded state, or when the angle between the first housing 310 and the second housing 320 is less than or equal to the second threshold angle value.

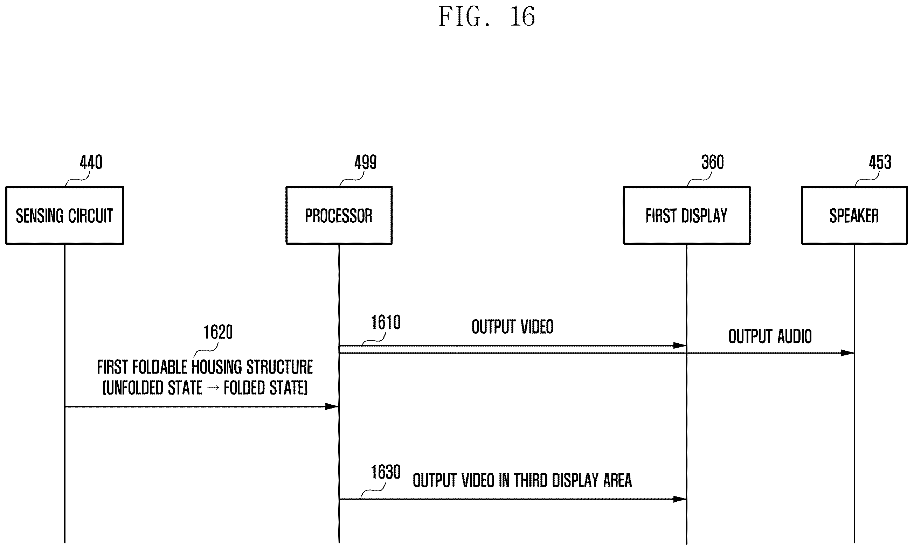

FIG. 16 is a flowchart for describing operations performed in the electronic device 300 when the first foldable housing structure 310 and 320 is changed to a folded state in a state where the electronic device 300 is unfolded, according to an embodiment.

In operation 1610, the processor 499 may control the first DDI 421 to output a video to the first display 360 (see FIG. 9A), and may control the audio processing circuit 450 to output audio to the speaker 453.

While the video and audio is being output, in operation 1620, the processor 499 may recognize, based on data received from the sensing circuit 440, that the first foldable housing structure 310 and 320 has been switched from an unfolded state to a folded state.

In operation 1630, the processor 499 may control the first DDI 421 to output a video to at least a portion of the third display area 363 (see FIG. 9B) based on recognition of a state transition in operation 1620.

According to an embodiment, an electronic device (e.g., the electronic device 300) may include: a first housing (e.g., the first housing 310); a second housing (e.g., the second housing 320); a third housing (e.g., the third housing 330); a first hinge assembly configured to couple the first housing to one side of the second housing, and to allow the first housing to rotate; a second hinge assembly configured to couple the third housing to the other side of the second housing, and to allow the third housing to rotate; a first display (e.g., the first display 360) including: a first display area disposed on the first housing, a second display area disposed on the second housing, and a third display area disposed on the third housing; a second display (e.g., the second display 370) disposed on the first housing and disposed in a direction opposite to the first display area; at least one sensor configured to detect a first folding state between the first housing and the second housing, and a second folding state between the second housing and the third housing; a memory storing instructions; and a processor (e.g., the processor 499). The instructions, when executed by the processor, may cause the electronic device to display an execution screen of an application on the second display, when the application is executed in a state where the first housing, second housing, and third housing are folded. The instructions, when executed by the processor, may cause the electronic device to identify, based on data received from the at least one sensor, that the first housing and the second housing are switched from the folded state to the unfolded state, during the execution of the application. The instructions, when executed by the processor, may cause the electronic device to pause the execution of the application, based on the first housing and the second housing being switched to the unfolded state. The instructions, when executed by the processor, may cause the electronic device to identify, based on data received from the at least one sensor, that the second housing and the third housing are switched from the folded state to the unfolded state. The instructions, when executed by the processor, may cause the electronic device to perform execution of the paused application by using the first display, based on the second housing and the third housing being switched to the unfolded state.

The instructions, when executed by the processor, may cause the electronic device to stop outputting a video to the second display, and stop outputting an audio to a speaker of the electronic device, or to an external electronic device via a wireless communication circuit of the electronic device, as an operation of pausing the execution of the application. The instructions, when executed by the processor, may cause the electronic device to output the video to the first display, and output the audio to the speaker or the external electronic device, as an operation of performing the execution of the application by using the first display.

The instructions, when executed by the processor, may cause the electronic device to stop outputting a sound notifying of a call reception to the speaker of the electronic device, or to the external electronic device via the wireless communication circuit of the electronic device, as an operation of pausing the execution of the application. The instructions, when executed by the processor, may cause the electronic device to display an execution screen of a call application on the first display, as an operation of performing the execution of the application by using the first display.

The instructions, when executed by the processor, may cause the electronic device to stop displaying an image acquired from a camera of the electronic device on the second display, as an operation of pausing the execution of the application. The instructions, when executed by the processor, may cause the electronic device to stop recording using the camera, as an operation of pausing the execution of the application. The instructions, when executed by the processor, may cause the electronic device to display the image acquired from the camera on the first display, and resume recording using the camera, as an operation of performing the execution of the application by using the first display. The camera may include a first camera disposed on the second housing, a second camera disposed on the second housing, and a third camera disposed on the first housing. A lens of the first camera may face in a direction identical to a direction in which the second display area faces; a lens of the second camera may face in a direction opposite to a direction in which the second display area faces; and a lens of the third camera may face in a direction identical to a direction in which the second display faces. The instructions, when executed by the processor, may cause the electronic device to stop displaying an image acquired from the third camera on the second display, and stop recording using the third camera, as an operation of pausing the execution of the application. The instructions, when executed by the processor, may cause the electronic device to display an image acquired from the first camera on the first display, and resume recording using the first camera, as an operation of performing the execution of the application by using the first display.

According to an embodiment, an electronic device (e.g., the electronic device 300) may include: a first housing (e.g., the first housing 310); a second housing (e.g., the second housing 320); a third housing (e.g., the third housing 330); a first hinge assembly configured to couple the first housing to one side of the second housing, and to allow the first housing to rotate; a second hinge assembly configured to couple the third housing to the other side of the second housing, and to allow the third housing to rotate; a first display (e.g., the first display 360) including: a first display area disposed on the first housing, a second display area disposed on the second housing, and a third display area disposed on the third housing; a second display (e.g., the second display 370) disposed on the first housing and disposed in a direction opposite to the first display area; at least one sensor configured to detect a first folding state between the first housing and the second housing, and a second folding state between the second housing and the third housing; a memory storing instructions; and a processor (e.g., the processor 499). The instructions, when executed by the processor, may cause the electronic device to display an execution screen of an application on the first display, when the application is executed in a state where the first housing, second housing, and third housing are unfolded. The instructions, when executed by the processor, may cause the electronic device to identify, based on data received from the at least one sensor, that the second housing and the third housing are switched from the unfolded state to the folded state, during the execution of the application using the second display. The instructions, when executed by the processor, may cause the electronic device to pause the execution of the application, based on the second housing and the third housing being switched to the folded state. The instructions, when executed by the processor, may cause the electronic device to identify, based on data received from the at least one sensor, that the first housing and the second housing are switched from the unfolded state to the folded state. The instructions, when executed by the processor, may cause the electronic device to perform execution of the temporarily paused application by using the second display, based on the first housing and the second housing being switched to the folded state.

The instructions, when executed by the processor, may cause the electronic device to stop outputting a video to the first display, and stop outputting an audio to a speaker of the electronic device, or to an external electronic device via a wireless communication circuit of the electronic device, as an operation of pausing the execution of the application. The instructions, when executed by the processor, may cause the electronic device to output the video to the second display, and output the audio to the speaker or the external electronic device, as an operation of performing the execution of the application by using the second display.

The instructions, when executed by the processor, may cause the electronic device to stop displaying an image acquired from a camera of the electronic device on the first display, as an operation of pausing the execution of the application. The instructions, when executed by the processor, may cause the electronic device to stop recording using the camera, as an operation of pausing the execution of the application. The instructions, when executed by the processor, may cause the electronic device to display the image acquired from the camera on the second display, and resume recording using the camera, as an operation of performing the execution of the application by using the second display.

According to an embodiment, an electronic device (e.g., the electronic device 300) may include: a first housing (e.g., the first housing 310); a second housing (e.g., the second housing 320); a third housing (e.g., the third housing 330); a first hinge assembly configured to couple the first housing to one side of the second housing, and to allow the first housing to rotate; a second hinge assembly configured to couple the third housing to the other side of the second housing, and to allow the third housing to rotate; a first display (e.g., the first display 360) including: a first display area disposed on the first housing, a second display area disposed on the second housing, and a third display area disposed on the third housing; at least one sensor configured to detect a first folding state between the first housing and the second housing, and a second folding state between the second housing and the third housing; a memory storing instructions; and a processor (e.g., the processor 499). The instructions, when executed by the processor, may cause the electronic device to display a first execution screen of an application on the first display area, the second display area, and the third display area, in a state where the first housing, the second housing, and the third housing are in the unfolded state. The instructions, when executed by the processor, may cause the electronic device to identify, based on data received from the at least one sensor, that the first housing and the second housing have switched from the unfolded state to the folded state. The instructions, when executed by the processor, may cause the electronic device, when the first housing and the second housing are switched to the folded state, to generate a second execution screen by reconfiguring a layout of the first execution screen based on a size of the third display area, and to display the second execution screen on the third display area.

The instructions, when executed by the processor, may cause the electronic device, as an operation of generating the second execution screen, to reduce a size of the first execution screen to fit a size of the third display area, and to omit some of user interface (UI) elements for user interaction included in the first execution screen.

According to an embodiment, an electronic device (e.g., the electronic device 300) may include: a first housing (e.g., the first housing 310); a second housing (e.g., the second housing 320); a third housing (e.g., the third housing 330); a first hinge assembly configured to couple the first housing to one side of the second housing, and to allow the first housing to rotate; a second hinge assembly configured to couple the third housing to the other side of the second housing, and to allow the third housing to rotate; a first display (e.g., the first display 360) including: a first display area disposed on the first housing, a second display area disposed on the second housing, and a third display area disposed on the third housing; a second display (e.g., the second display 370) disposed on the first housing and disposed in a direction opposite to the first display area; at least one sensor configured to detect a first folding state between the first housing and the second housing, and a second folding state between the second housing and the third housing; a memory storing instructions; and a processor (e.g., the processor 499). The instructions, when executed by the processor, may cause the electronic device, while a first execution screen of an application is displayed on the second display in a folded state of the first housing, the second housing, and the third housing, to identify, based on data received from the at least one sensor, that the first housing and the second housing are switched from the folded state to the unfolded state. The instructions, when executed by the processor, may cause the electronic device, based on the first housing and the second housing being switched to the unfolded state, to display the first execution screen on the first display area of the first display, instead of the second display.

The instructions, when executed by the processor, may cause the electronic device to identify that the second housing and the third housing are switched from the folded state to the unfolded state. The instructions, when executed by the processor, may cause the electronic device, based on the second housing and the third housing being switched to the unfolded state, to generate a second execution screen of the application and to display the second execution screen on the first display area, the second display area, and the third display area.

The instructions, when executed by the processor, may cause the electronic device to recognize that the second housing and the third housing are switched from the folded state to the unfolded state. The instructions, when executed by the processor, may cause the electronic device, based on the second housing and the third housing being switched to the unfolded state, to display the first execution screen on the second display area.

According to an embodiment, an electronic device (e.g., the electronic device 300) may include: a foldable housing including a first housing (e.g., first housing 310), a second housing (e.g., second housing 320) rotatably coupled to the first housing, a third housing (e.g., third housing 330) rotatably coupled to the second housing; a first hinge assembly configured to rotatably couple the first housing and the second housing; a second hinge assembly configured to rotatably couple the second housing and the third housing; a first display (e.g., the first display 360) including a first display area disposed in the first housing, a second display area disposed in the second housing, and a third display area disposed in the third housing; a second display (e.g., the second display 370) disposed on a rear surface of the first display, and disposed in a direction opposite to the first display area or the second display area; at least one sensor configured to detect a folding state of the first housing, the second housing, or the third housing; a memory storing instructions ; and a processor (e.g., the processor 499). The instructions, when executed by the processor, may cause the electronic device, when an application is executed in a first state in which the first housing, the second housing, and the third housing are folded, to display an execution screen of the application on the second display. The instructions, when executed by the processor, may cause the electronic device to identify, based on data received from the at least one sensor, that at least one housing of the first housing, the second housing, or the third housing is switched from an folded state to an unfolded second state, while the application is being executed. The instructions, when executed by the processor, may cause the electronic device, based on the electronic device being switched to the second state, to pause the execution of the application on the second display. The instructions, when executed by the processor, may cause the electronic device to identify, based on data received from the at least one sensor, that the first housing, the second housing, and the third housing are switched from an folded state to an unfolded third state. The instructions, when executed by the processor, may cause the electronic device, based on the electronic device being switched to the third state, to display the execution screen of the application on the first display.

The instructions, when executed by the processor, may cause the electronic device to stop outputting a video to the second display, and stop outputting an audio to a speaker of the electronic device, or to an external electronic device via a wireless communication circuit of the electronic device, as an operation of pausing the execution of the application. The instructions, when executed by the processor, may cause the electronic device to output the video to the first display, and output the audio to the speaker or the external electronic device, as an operation of performing the execution of the application by using the first display.

The instructions, when executed by the processor, may cause the electronic device to stop outputting a sound notifying of a call reception to the speaker of the electronic device, or to the external electronic device via the wireless communication circuit of the electronic device, as an operation of pausing the execution of the application. The instructions, when executed by the processor, may cause the electronic device, as an operation of displaying the execution screen of the application on the first display, to display an execution screen of a call application on the first display.

The instructions, when executed by the processor, may cause the electronic device to stop displaying an image acquired from a camera of the electronic device on the second display, as an operation of pausing the execution of the application. The instructions, when executed by the processor, may cause the electronic device to stop recording using the camera, as an operation of pausing the execution of the application. The instructions, when executed by the processor, may cause the electronic device, as an operation of displaying the execution screen of the application on the first display, to display an image acquired from the camera on the first display, and to resume recording using the camera. The camera may include a first camera disposed on the second housing, a second camera disposed on the second housing, and a third camera disposed on the first housing. A lens of the first camera may face in a direction identical to a direction in which the second display area faces; a lens of the second camera may face in a direction opposite to a direction in which the second display area faces; and a lens of the third camera may face in a direction identical to a direction in which the second display faces. The instructions, when executed by the processor, may cause the electronic device to stop displaying an image acquired from the third camera on the second display, and stop recording using the third camera, as an operation of pausing the execution of the application. The instructions, when executed by the processor, may cause the electronic device, as an operation of displaying the execution screen of the application on the first display, to display an image acquired from the first camera on the first display, and to resume recording using the first camera.

The at least one sensor may include a first sensor configured to detect a first folding state of the first housing and the second housing, and a second sensor configured to detect a second folding state of the second housing and the third housing.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device, comprising:
a foldable housing including
a first housing,
a second housing rotatably coupled to the first housing,
a third housing rotatably coupled to the second housing;
a first hinge assembly configured to rotatably couple the first housing and the second housing;
a second hinge assembly configured to rotatably couple the second housing and the third housing;
a first display including
a first display area disposed on the first housing,
a second display area disposed on the second housing, and
a third display area disposed on the third housing;
a second display disposed on a rear surface of the first display, and disposed in a direction opposite to the first display area or the second display area;
at least one sensor configured to detect a folding state of the first housing, the second housing, or the third housing;
a memory storing instructions; and
a processor, wherein the instructions, when executed by the processor, cause the electronic device to:
when an application is executed in a first state in which the first housing, the second housing, and the third housing are folded,
display an execution screen of the application on the second display;
identify, during execution of the application, based on data received from the at least one sensor, that at least one of the first housing, the second housing, or the third housing is switched from a folded state to an unfolded second state;
pause an execution of the application on the second display, based on the switch to the second state;
identify, based on data received from the at least one sensor, that the first housing, the second housing, and the third housing are switched from an folded state to an unfolded third state; and
display the execution screen of the application on the first display, based on the switch to the third state.

2. The electronic device of claim 1, wherein the instructions, when executed by the processor, cause the electronic device to:
stop outputting a video to the second display; and
stop outputting an audio to a speaker of the electronic device, or to an external electronic device via a wireless communication circuit of the electronic device,
as an operation of pausing the execution of the application.

3. The electronic device of claim 2, wherein the instructions, when executed by the processor, cause the electronic device to:
output the video to the first display; and
output the audio to the speaker or the external electronic device,
as an operation of performing the execution of the application by using the first display.

4. The electronic device of claim 1, wherein the instructions, when executed by the processor, cause the electronic device to:
stop outputting a sound notifying of a call reception to a speaker of the electronic device, or to an external electronic device via a wireless communication circuit of the electronic device, as an operation of pausing the execution of the application.

5. The electronic device of claim 4, wherein the instructions, when executed by the processor, cause the electronic device to:
display an execution screen of a call application on the first display, as an operation of displaying the execution screen of the application on the first display.

6. The electronic device of claim 1, wherein the instructions, when executed by the processor, cause the electronic device to:
stop displaying an image acquired from a camera of the electronic device on the second display, as an operation of pausing the execution of the application.

7. The electronic device of claim 6, wherein the instructions, when executed by the processor, cause the electronic device to:
stop recording using the camera, as an operation of pausing the execution of the application.

8. The electronic device of claim 7, wherein the instructions, when executed by the processor, cause the electronic device to:
display an image acquired from the camera on the first display; and
resume recording using the camera,
as an operation of displaying the execution screen of the application on the first display.

9. The electronic device of claim 8, wherein the camera includes:
a first camera disposed on the second housing;
a second camera disposed on the second housing; and
a third camera disposed on the first housing,
wherein a lens of the first camera faces in a direction identical to a direction in which the second display area faces,
a lens of the second camera faces in a direction opposite to the direction in which the second display area faces, and
a lens of the third camera faces in a direction identical to a direction in which the second display faces,
wherein the instructions, when executed by the processor, cause the electronic device, as an operation of pausing an execution of the application, to:
stop displaying an image acquired from the third camera on the second display; and
stop recording using the third camera, and
wherein the instructions, when executed by the processor, cause the electronic device, as an operation of displaying an execution screen of the application on the first display, to:
display an image acquired from the first camera on the first display; and
resume recording using the first camera.

10. The electronic device of claim 1, wherein the at least one sensor includes:
a first sensor configured to detect a first folding state of the first housing and the second housing; and
a second sensor configured to detect a second folding state of the second housing and the third housing.

11. An electronic device, comprising:
a foldable housing including
a first housing,
a second housing rotatably coupled to the first housing,
a third housing rotatably coupled to the second housing;
a first hinge assembly configured to rotatably couple the first housing and the second housing;
a second hinge assembly configured to rotatably couple the second housing and the third housing;
a first display including
a first display area disposed on the first housing,
a second display area disposed on the second housing, and
a third display area disposed on the third housing;
a second display disposed on a rear surface of the first display and disposed in a direction opposite to the first display area or the second display area;
at least one sensor configured to detect a folding state of the first housing, the second housing, or the third housing;
a memory storing instructions; and
a processor,
wherein the instructions, when executed by the processor, cause the electronic device, when an application is executed in a state where the first housing, the second housing, and the third housing are in an unfolded state, to:
display an execution screen of the application on the first display;
identify, based on data received from the at least one sensor during execution of the application, that the second housing and the third housing are switched from an unfolded state to a folded state;
pause execution of the application, based on the second housing and the third housing switching to the folded state;
identify, based on data received from the at least one sensor, that the first housing and the second housing are switched from an unfolded state to a folded state; and
perform execution of the paused application by using the second display, based on the first housing and the second housing switching to a folded state.

12. The electronic device of claim 11, wherein the instructions, when executed by the processor, cause the electronic device to:
stop outputting a video to the first display; and
stop outputting an audio to a speaker of the electronic device, or to an external electronic device via a wireless communication circuit of the electronic device,
as an operation of pausing the execution of the application.

13. The electronic device of claim 11, wherein the instructions, when executed by the processor, cause the electronic device to:
stop displaying an image acquired from a camera of the electronic device on the first display, as an operation of pausing the execution of the application.

14. An electronic device, comprising:
a foldable housing including
a first housing,
a second housing rotatably coupled to the first housing,
a third housing rotatably coupled to the second housing;
a first hinge assembly configured to rotatably couple the first housing and the second housing;
a second hinge assembly configured to rotatably couple the second housing and the third housing;
a first display including
a first display area disposed on the first housing,
a second display area disposed on the second housing, and
a third display area disposed on the third housing;
a second display disposed on a rear surface of the first display, and disposed in a direction opposite to the first display area or the second display area;
at least one sensor configured to detect a folding state of the first housing, the second housing, or the third housing;
a memory storing instructions; and
a processor,
wherein the instructions, when executed by the processor, cause the electronic device to:
display a first execution screen of an application on the first display area, the second display area, and the third display area in a state where the first housing, the second housing, and the third housing are unfolded;
identify, based on data received from the at least one sensor, that the first housing and the second housing are switched from an unfolded state to a folded state; and
generate a second execution screen by reconfiguring a layout of the first execution screen based on a size of the third display area, when the first housing and the second housing are switched to a folded state, and display the second execution screen on the third display area.

15. An electronic device, comprising:
a foldable housing including
a first housing,
a second housing rotatably coupled to the first housing,
a third housing rotatably coupled to the second housing;
a first hinge assembly configured to rotatably couple the first housing and the second housing;
a second hinge assembly configured to rotatably couple the second housing and the third housing;
a first display including
a first display area disposed on the first housing,
a second display area disposed on the second housing, and
a third display area disposed on the third housing;
a second display disposed on a rear surface of the first display, and disposed in a direction opposite to the first display area or the second display area;
at least one sensor configured to detect a folding state of the first housing, the second housing, or the third housing;
a memory storing instructions; and
a processor,
wherein the instructions, when executed by the processor, cause the electronic device, while a first execution screen of an application is displayed on the second display in a folded state of the first housing, the second housing, and the third housing, to:
identify, based on data received from the at least one sensor, that the first housing and the second housing are switched from a folded state to an unfolded state; and
display, based on the first housing and the second housing switching to the unfolded state, the first execution screen on the first display area of the first display instead of the second display.
